# EUROPEAN PATENT APPLICATION

(11) **EP 4 813 481 A1**
(43) Date of publication of application: **30.09.2026**
(21) Application number: 26167642.3
(22) Date of filing: 25.03.2026
(51) Int. Cl.: A63F 13/285

(54) **VIBRATION CONTROL SYSTEM, PROGRAM, AND COMPUTER-IMPLEMENTED METHOD**

(30) Priority: 27.03.2025 JP 2025053897
(71) Applicant: Nintendo Co., Ltd., Kyoto-shi, Kyoto 601-8501 (JP)
(72) Inventor: AOKI, Takafumi, Kyoto, 601-8501 (JP); AMANO, Yasuhiro, Kyoto, 601-8501 (JP)
(74) Representative: Lorenz Seidler Gossel Part. mbB

(57) **Abstract**

A vibration control system (10) generates vibration instruction data (114) comprising amplitude instruction data instructing a vibration amplitude of a vibration motor (206), based on occurrence of a vibration event, the vibration motor being controlled using a control amplitude. The system (10) determines at least one of whether an amplitude instructed by previous amplitude instruction data is zero or substantially zero, or whether a previous control amplitude is zero or substantially zero. The amplitude instructed by the amplitude instruction data is increased based on the determining.

## Description

The present disclosure relates to a vibration control system, program, and a computer-implemented method.

### INTRODUCTION

Conventionally, a game system exists that gives a vibration effect to a user who plays a game. For example, Japanese Patent Laying-Open No. 2016-202486 discloses a system that gives a vibration effect to a user.

### SUMMARY

Conventional game systems had room for improvement in the reality and variation of vibration sensation.

(Configuration 1) A vibration control system comprising one or more processors and/or processing circuits and one or more memories storing instructions that cause the one or more processors and/or processing circuits to perform operations. The operations comprise: generating vibration instruction data comprising amplitude instruction data instructing a vibration amplitude of a vibration motor, based on occurrence of a vibration event, the vibration motor being controlled using a control amplitude determining at least one of whether an amplitude instructed by previous amplitude instruction data is zero or substantially zero, or whether a previous control amplitude is zero or substantially zero, increasing the control amplitude instructed by the amplitude instruction data based on the determining, and controlling the vibration motor using the increased control amplitude.

(Configuration 2) The vibration control system according to Configuration 1, wherein the vibration instruction data further comprises frequency instruction data instructing a vibration frequency, and the increasing is performed when a frequency instructed by the generated frequency instruction data satisfies a specified condition.

(Configuration 3) The vibration control system according to any one of Configurations 1 to 5, wherein a plurality of the vibration instruction data are generated for one timing, and the operations further comprise performing a first adjustment of a total of amplitudes related to the plurality of vibration instruction data for the same timing. The increasing is executed before the first adjustment.

(Configuration 4) The vibration control system according to Configuration 3, wherein the increasing is configured to increase the amplitude instructed by the amplitude instruction data when the amplitude instructed by the previous amplitude instruction data is zero or substantially zero, or when the previous control amplitude is zero or substantially zero, for each of the plurality of vibration instruction data generated for the same timing.

(Configuration 5) The vibration control system according to any one of Configurations 1 to 5, wherein the vibration control system is capable of controlling a first vibration motor and a second vibration motor, and the increasing is performed when the second vibration motor is controlled and is not performed when the first vibration motor is controlled.

(Configuration 6) The vibration control system according to any one of Configurations 1 to 5, wherein the operations further comprise selecting whether to generate control data that gradually approaches an amplitude instructed by current vibration instruction data or to immediately generate control data corresponding to the amplitude instructed by the current vibration instruction data, based on the determining.

(Configuration 7) One or more non-transitory computer-readable storage media having stored therein instructions that cause one or more processors and/or processing circuits to perform operations comprising: acquiring vibration instruction data comprising amplitude instruction data instructing a vibration amplitude of a vibration motor controlled using a control amplitude, the vibration instruction data being generated based on occurrence of a vibration event; and determining at least one of whether an amplitude instructed by previous amplitude instruction data is zero or substantially zero, or whether a previous control amplitude is zero or substantially zero, increasing the control amplitude instructed by the amplitude instruction data based on the determining, and controlling thea vibration motor using the increased control amplitude.

(Configuration 8) The one or more non-transitory computer-readable storage media according to Configuration 7, wherein the vibration instruction data further comprises frequency instruction data instructing a vibration frequency, and the increasing is performed when a frequency instructed by the generated frequency instruction data satisfies a specified condition.

(Configuration 9) The one or more non-transitory computer-readable storage media according to Configuration 7, wherein a plurality of the vibration instruction data are generated for one timing, and the operations further comprise adjusting a total of amplitudes related to the plurality of vibration instruction data for the same timing as first adjustment. The increasing is performed before the adjusting.

(Configuration 10) The one or more non-transitory computer-readable storage media according to Configuration 9, wherein the increasing is configured to increase the amplitude instructed by the amplitude instruction data when the amplitude instructed by the previous amplitude instruction data is zero or substantially zero, or when the previous control amplitude is zero or substantially zero, for each of the plurality of vibration instruction data generated for the same timing.

(Configuration 11) The one or more non-transitory computer-readable storage media according to Configuration 7, wherein the one or more processors are capable of controlling a first vibration motor and a second vibration motor by executing processing of the program, and the increasing is performed when the second vibration motor is controlled and is not performed when the first vibration motor is controlled.

(Configuration 12) A computer-implemented method comprising: acquiring vibration instruction data comprising amplitude instruction data instructing a vibration amplitude of a vibration motor generated based on occurrence of a vibration event; the vibration motor being controlled using a control amplitude; and determining at least one of whether an amplitude instructed by previous amplitude instruction data is zero or substantially zero, or whether a previous control amplitude is zero or substantially zero, and increasing the control amplitude instructed by the amplitude instruction data based on the determining, and controlling the vibration motor using the increased control amplitude.

(Configuration 13) The method according to Configuration 12, wherein the vibration instruction data further comprises frequency instruction data instructing a vibration frequency, and the increasing is executed when a frequency instructed by the generated frequency instruction data satisfies a specified condition.

(Configuration 14) The method according to Configuration 12, wherein a plurality of the vibration instruction data are generated for one timing, and the method further comprises adjusting a total of amplitudes related to the plurality of vibration instruction data for the same timing as first adjustment. The increasing is performed before the adjusting.

(Configuration 15) The method according to Configuration 12, wherein a first vibration motor and a second vibration motor are controllable, and the increasing is performed when the second vibration motor is controlled and is not performed when the first vibration motor is controlled.

The foregoing and other features, aspects and advantages of the present disclosure will become more apparent from the following detailed description of the present disclosure when taken in conjunction with the accompanying drawings.

### BRIEF DESCRIPTION OF THE DRAWINGS

FIG. 1 is a schematic diagram illustrating an example of the vibration control system.
FIG. 2 is a flowchart illustrating the procedure of processing for acquiring information indicating the type of the game controller.
FIG. 3 is a diagram for explaining an example of generating vibration instruction data based on the vibration file in Embodiment 1.
FIG. 4 is a diagram illustrating frequency characteristic data used in frequency characteristic adjustment processing of the first controller.
FIG. 5 is a diagram illustrating frequency characteristic data used in frequency characteristic adjustment processing of the second controller.
FIG. 6 is a diagram for explaining adjustment processing.
FIG. 7 is a flowchart illustrating the procedure of generating vibration instruction data comprising a normalized amplitude value executed in Embodiment 1.
FIG. 8 is a flowchart illustrating the adjustment procedure of vibration instruction data executed by the game apparatus in Embodiment 1.
FIG. 9 is a flowchart illustrating the procedure of boost processing (step S105Z).
FIG. 10 is a flowchart illustrating the procedure of frequency characteristic adjustment processing (step S106) for each type of the game controller.
FIG. 11 is a flowchart illustrating the processing procedure of control data generation executed by the game controller in Embodiment 1.
FIG. 12 is a flowchart illustrating the procedure of terminal processing (step S203).
FIG. 13 is a flowchart illustrating the processing procedure of starting processing in step S214.
FIG. 14 is an example of a waveform of first control data generated based on the first impact event.
FIG. 15 is a diagram illustrating a reference waveform during timings T103 to T104.
FIG. 16 is a diagram illustrating a waveform of termination vibration output as a result of processing in control cycle units corresponding to the period of timings T103 to T104.
FIG. 17 is a diagram illustrating a waveform of one modified example embodiment.
FIG. 18 is a diagram for explaining one modified example embodiment of frequency characteristic adjustment processing.
FIG. 19 is a diagram illustrating one modified example embodiment of the processing procedure of starting processing.
FIG. 20 is a flowchart illustrating the procedure of generating vibration instruction data 114 comprising a normalized amplitude value in the game apparatus in Embodiment 2.
FIG. 21 is a diagram for explaining an example of generating vibration instruction data 110 after adjustment processing based on the vibration file in Embodiment 2.
FIG. 22 is a flowchart illustrating the execution procedure of a rhythm game in Embodiment 3.
FIG. 23 is a flowchart illustrating the procedure of generating vibration instruction data 114 comprising a normalized amplitude value in the game apparatus in Embodiment 3.
FIG. 24 is a flowchart illustrating the conversion procedure of vibration instruction data executed by the game apparatus in Embodiment 4.
FIG. 25 is a flowchart illustrating the processing procedure of control data generation executed by the game controller in Embodiment 4.

The same reference numerals are assigned to the same or corresponding parts in the drawings, and the description thereof is not repeated.

### DETAILED DESCRIPTION OF NON-LIMITING EXAMPLE EMBODIMENTS

An example embodiment will be described in detail with reference to the drawings. The same or corresponding elements in the drawings have the same reference characters allotted and description thereof will not be repeated.

### [Embodiment 1]

[A. Overview] An example of a configuration of the vibration control system 10 that controls the vibration motor 206 will be described.

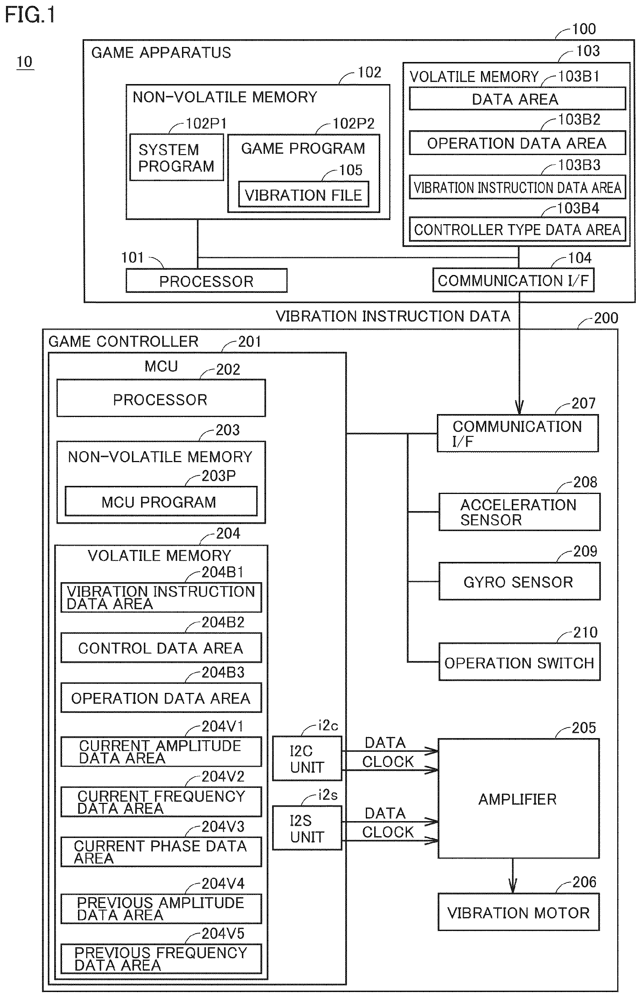

FIG. 1 is a schematic diagram illustrating an example of the vibration control system 10. In an example embodiment, the vibration control system 10 is applied to, for example, a game system. The processor, the memory, the communication interface, etc., of the vibration control system 10 comprise a computer. Also, a processor, a memory, a communication interface, etc., of the game apparatus 100 are an example of a computer, and a processor, a memory, a communication interface, etc., of the game controller 200 are an example of a computer. The computer may comprise a plurality of information processing apparatuses, device processors, etc.

The game apparatus 100 causes a display device such as a TV monitor, an LCD, an organic EL (Electro Luminescence), or a head mounted display (HMD: Head Mounted Display) to display a video or an image to a user and proceeds with the game according to a program. A user operates the game controller 200 according to the video or the image displayed on the display device. The game apparatus 100 receives input from the user to the game controller 200, and proceeds with the game according to the input from the user.

### [B. Configuration of the Game Apparatus]

The game apparatus 100 comprises a processor 101, a non-volatile memory 102, a volatile memory 103, and a communication interface (I/F) 104. The processor 101 is a processing entity (processing unit) for executing processing provided by the game apparatus 100. The processor 101 reads the system program 102P1 and the game program 102P2 stored in the non-volatile memory 102, deploys the system program 102P1 and the game program 102P2 in the volatile memory 103, and executes the system program 102P1 and the game program 102P2. A program may mean a single program or a collection of program modules comprising a plurality of programs. In the case of a collection of program modules, each program may be stored in a different memory, and may be executed by a different processor, and for example, a part of the program may be executed by the processor 101, and another part may be executed by the MCU 201.

The processor 101 is a processing circuit, and is, for example, a CPU (Central Processing Unit). In the present specification, the term "processor" comprises hardwired circuits such as an ASIC and an FPGA, in addition to the normal meaning of a processing circuit such as a CPU, an MPU (Micro Processing Unit), and a GPU (Graphics Processing Unit) that executes processing according to instruction codes described in a program. Hardwired circuits such as an ASIC and an FPGA have circuits corresponding to processing to be executed formed in advance. Furthermore, the "processor" of the present specification may comprise a circuit in which a plurality of functions are integrated, such as an SoC (System on Chip). The processor 101 may be, for example, an SoC in which functions of a CPU and a GPU are integrated. Also, an aspect in which a plurality of processors share and cooperatively execute processing executed by a single processor in an example is comprised in the present specification as one modified example embodiment.

The non-volatile memory 102 is a non-volatile storage device (storage medium) accessible by the processor 101, and for example, an SSD (Solid State Drive), a NAND flash memory, or a hard disk, etc., may be used. The non-volatile memory 102 may be a storage medium detachable from the game apparatus 100, such as an optical disk or a cartridge. The system program 102P1 and the game program 102P2 are stored in the non-volatile memory 102. The system program 102P1 is a program that performs basic processing of the game apparatus 100. The system program 102P1 also comprises a program for transmitting various data stored in the volatile memory 103 to the game controller 200. The game program 102P2 is a program for executing a game, and is stored in, for example, a game cartridge or a disk detachably attached to the game apparatus 100, or is downloaded to the non-volatile memory 102 via the Internet. The game program 102P2 comprises a vibration file 105.

The vibration file 105 comprises information for indicating a vibration effect for each vibration event. A vibration event comprises an event that generates impact vibration, but may comprise an event that generates vibration other than the impact vibration. An impact vibration effect is an effect that causes the user to feel impact vibration generated during the progress of the game, and is a strong vibration of a short period. For example, it is instructed according to an event such as a collision or an explosion between objects in the virtual game space, or firing of a gun, etc., and is also used for expression of a beat, etc. More specifically, an amplitude corresponding to the maximum allowable voltage of the vibration motor 206 is specified for the amplitude. The specified amplitude does not need to coincide with the maximum allowable voltage of the vibration motor 206, and may be an amplitude close to the maximum allowable voltage.

The specified amplitude may be, for example, 80% or more of the maximum allowable voltage. Also, in the case of a vibration motor with a large output, the output may be 60% or more of the maximum allowable voltage. Also, the vibration duration may be, for example, a period of one wavelength or less at the allowable lower limit frequency specified by the game program 102P2, or may be a period of two wavelengths or less. Also, the vibration duration may be a period of 50 ms (milliseconds) or less, or may be a period of 25 ms or less. The frequency may not be particularly limited, and specifying a low frequency results in heavy impact vibration, and specifying a high frequency results in sharp impact vibration. When control input of a wavelength larger than one wavelength (for example, two wavelengths) is performed in a period of 50 ms or less, stronger impact vibration can be achieved as compared with the case of one wavelength. When the vibration period is a short period such as 50 ms, humans recognize a difference between one wavelength and two wavelengths as a difference in vibration intensity.

For example, the frequency may be changed according to the magnitude of the collision (a speed of the collision, a weight of the collided object, etc.) in the virtual game space. That is, the effect of the impact vibration effect can be changed by changing the frequency. The frequency may be limited by various conditions of the system. An impact event is an event that is a factor that causes the impact vibration effect to occur, and in other words, is a condition for generating the impact vibration effect.

The vibration event comprises a normal vibration event as an event other than the impact vibration event. The normal vibration event may be, for example, vibration for which a period equal to or longer than a specified level (for example, a period longer than two wavelengths) is specified, or an event that generates vibration equal to or less than a specified level with respect to the maximum allowable voltage of the vibration motor. In the normal vibration event, a desired frequency, a desired amplitude, and a desired period are specified, similar to the impact vibration event. The game program 102P2 can specify an appropriate frequency, amplitude, and period according to the nature of the vibration event.

The volatile memory 103 is a volatile storage device (storage medium) accessible by the processor 101, and for example, a DRAM (Dynamic Random Access Memory) or an SRAM (Static Random Access Memory), etc., may be used. The volatile memory 103 comprises a data area 103B1, an operation data area 103B2, a vibration instruction data area 103B3, and a controller type data area 103B4. The data area 100B1 is an area that temporarily stores various data generated when the processor 101 executes the game program 102P2, for example.

The operation data area 103B2 is an area that temporarily stores operation data received from the game controller 200. Operation data is data indicating input to the game controller 200 by the user, and is a detection value of the acceleration sensor 208, the gyro sensor 209, and the operation switch 210, etc.

The vibration instruction data area 103B3 is an area that temporarily stores vibration instruction data for vibrating the vibration motor 206 comprised in the game controller 200. The vibration instruction data area 103B3 can store at least one vibration instruction data corresponding to a certain one timing. The vibration instruction data area 103B3 in an example embodiment is configured to be capable of storing two pieces of vibration instruction data corresponding to one timing. The term "memory" in the present specification comprises at least both the non-volatile memory 102 and the volatile memory 103.

The controller type data area 103B4 is an area for storing information indicating the type of the game controller 200 connected to the game apparatus 100. The game controller 200 may be configured to be detachable from the game apparatus 100. Therefore, a plurality of types of game controllers 200 may be connected to the game apparatus 100. The processor 101 acquires information indicating the type of the connected game controller 200 when a new game controller 200 is connected to the game apparatus 100. The processor 101 may acquire the information indicating the type of the game controller 200 from the connected game controller 200 itself, or may access the Internet to acquire the information indicating the type of the game controller 200.

The information indicating the type of the game controller 200 comprises at least information indicating the type of the vibration motor 206 stored in the game controller 200. For example, a first type of game controller 200 has a first type of vibration motor, and a second type of game controller 200 has a second type of vibration motor. In the following, the first type of game controller 200, the second type of game controller 200, the first type of vibration motor, and the second type of vibration motor may be respectively referred to as "first controller", "second controller", "first vibration motor", and "second vibration motor". As described later, the processor 101 acquires information regarding the type from the connected game controller 200 at a stage when the game apparatus 100 is newly connected to the game controller 200.

The game apparatus 100 communicates with the game controller 200 via the communication interface 104. The communication interface 104 performs wireless communication with the game controller 200 using, for example, an antenna not shown in the drawings. The communication method of wireless communication between the game apparatus 100 and the game controller 200 is arbitrary, but in an example embodiment, the game apparatus 100 performs communication according to the Bluetooth (registered trademark) standard with the game controller 200. Communication between the game apparatus 100 and the game controller 200 may be wired communication, and in this case, the communication interface 104 may be a terminal of a USB (Universal Serial Bus) standard, etc., for example.

The game apparatus 100 proceeds with the game based on execution of the game program 102P2. In the progress of the game, an impact event, which is an expression comprising a large impact such as an explosion or a collision, may occur in the virtual game space. The game apparatus 100 generates the vibration instruction data described above, based on the occurrence of the impact event, and transmits the vibration instruction data to the game controller 200. The vibration instruction data will be described in detail later. The game apparatus 100 may generate a plurality of vibration instruction data to vibrate the vibration motor 206 at a certain timing. That is, the vibration motor 206 may vibrate based on a plurality of vibration instruction data at a certain one timing. In an example embodiment, the vibration motor 206 vibrates based on two pieces of vibration instruction data at a certain one timing. The vibration motor 206 may vibrate based on three or more vibration instruction data at a certain one timing.

### [C. Configuration of the Game Controller]

The game controller 200 comprises an MCU (Micro Controller Unit) 201, an amplifier 205, a vibration motor 206, a communication interface (I/F) 207, an acceleration sensor 208, a gyro sensor 209, and an operation switch 210.

The game controller 200 is typically a controller of a format that is held by both hands or one hand of the user, and receives input from the user by the operation switch 210 being operated by fingers of the user. The game controller 200 is not limited to a type of game controller held by a hand of the user, and may be, for example, a general-purpose keyboard or mouse comprising the vibration motor 206, or may be a type that receives input by a sole of the user contacting a sensor when laid on the floor.

The MCU 201 comprises a processor 202, a non-volatile memory 203, a volatile memory 204, an I2C (Inter Integrated Circuit) unit i2c, and an I2S (Inter Integrated circuit Sound) unit i2s. The processor 202, the non-volatile memory 203, the volatile memory 204, and the communication interface 207 respectively have hardware configurations similar to the processor 101, the non-volatile memory 102, the volatile memory 103, and the communication interface 104 described above. Therefore, description of these configurations is not repeated. However, the processor 202 may be a processor with lower processing capability than the processor 101 in order to reduce cost.

An MCU program 203P is stored in the non-volatile memory 203. The MCU program 203P comprises a program for executing various processing described later, and a program for transmitting detection values of the operation switch 210, the acceleration sensor 208, and the gyro sensor 209 to the game apparatus 100 via the communication interface 207. In an example embodiment, the MCU program 203P comprises a program for generating control data to be transmitted to the amplifier 205 based on the vibration instruction data received from the game apparatus 100. Control data is typically data indicating a voltage value of a waveform for driving the vibration motor 206. The control data is output at a specified cycle (unit time). This cycle is referred to as a control cycle. The MCU 201 generates control data based on the vibration instruction data. The processor 101 of the game apparatus 100 may generate control data directly, instead of vibration instruction data.

The volatile memory 204 comprises a vibration instruction data area 204B1, a control data area 204B2, an operation data area 204B3, a current amplitude data area 204V1, a current frequency data area 204V2, a current phase data area 204V3, a previous amplitude data area 204V4, and a previous frequency data area 204V5. The vibration instruction data area 204B1 is an area for temporarily storing vibration instruction data received from the game apparatus 100. The control data area 204B2 is an area for temporarily storing control data generated by the processor 202. The operation data area 204B3 is an area for temporarily storing operation data. The current amplitude data area 204V1, the current frequency data area 204V2, the current phase data area 204V3, the previous amplitude data area 204V4, and the previous frequency data area 204V5 will be described later. Each area for storing various data in the volatile memory 204 can store at least one data corresponding to a certain one timing. In an example embodiment, each area for storing various data in the volatile memory 204 stores two data corresponding to a certain one timing.

Content of the control data area 204B2 in the volatile memory 204 is transferred to the amplifier 205 using, for example, the I2S unit i2s. The I2S unit i2s is configured to be capable of realizing communication according to a bus interface standard that performs serial communication mainly for connecting digital audio devices. The I2C unit i2c is used to perform configuration of a register of the amplifier 205. The I2C unit i2c is also configured to be capable of realizing communication according to a bus interface standard that performs serial communication. Each of the I2S unit i2s and the I2C unit i2c has a plurality of signal lines, and comprises a clock signal line and a data signal line. In an example embodiment, the amplifier 205 is an amplifier that performs PWM (Pulse Width Modulation) control at a frequency of 8 kHz. The amplifier 205 determines a duty ratio every 0.125 ms based on the received control data, and supplies electric power to the vibration motor 206.

The vibration motor 206 may be, for example, a voice coil motor, an eccentric motor, a linear resonant motor (so-called LRA (Linear Resonant Actuator)), etc., and the motor type is not limited. The vibration motor 206 may be a coin type motor, etc. When the vibration motor 206 is an eccentric motor, the vibration motor 206 has a weight with a bias in shape attached to a rotation shaft, and generates vibration by rotating. Thereby, the vibration motor 206 can apply vibration to the user holding the game controller 200 in which the vibration motor 206 is stored.

The acceleration sensor 208 detects a magnitude of linear acceleration along specified three axial directions. The acceleration sensor 208 may detect acceleration in a uniaxial direction or a biaxial direction. The gyro sensor 209 detects a tilt, an angular velocity, an angular acceleration, etc., of the game controller 200, and outputs a detection result thereof to the operation data area 204B3.

Detection results of the acceleration sensor 208 and the gyro sensor 209 are output to the processor 101. The processor 101 in the game apparatus 100 can calculate information regarding motion and/or posture of the game controller 200 based on the detection results of the acceleration sensor 208 and the gyro sensor 209.

The operation switch 210 is typically at least one button, key, and/or stick provided on a surface of the game controller 200. The operation switch 210 may be a button associated with characters such as an A button and a B button, a directional pad for inputting directions of up, down, left, and right, an analog stick for inputting a tilt direction and a tilt amount, etc.

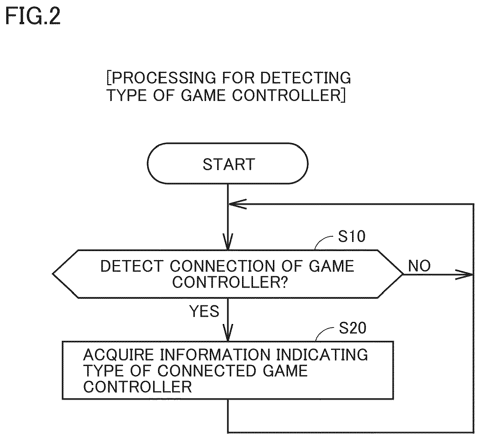

FIG. 2 is a flowchart illustrating the procedure of processing for acquiring information indicating the type of the game controller 200 in an example embodiment. Processing of the flowchart illustrated in FIG. 2 is realized by the processor 101 executing the game program 102P2, and is started based on electric power being supplied to the game apparatus 100.

The processor 101 determines whether or not a connection of the game controller 200 has been detected (step S10). When the connection of the game controller 200 is not detected (NO in step S10), the processor 101 repeats the processing of step S10. When the connection of the game controller 200 is detected (YES in step S10), the processor 101 acquires information indicating the type of the connected game controller 200 (step S20), and stores the information indicating the type of the game controller 200 in the controller type data area 103B4. Then, the processor 101 repeats the processing of step S10. When the connection of the game controller 200 is disconnected, the processor 101 may discard the information indicating the type of the game controller 200 corresponding to the game controller 200 for which the connection has been disconnected.

### [D. Flow of generating vibration instruction data Based on the Vibration File]

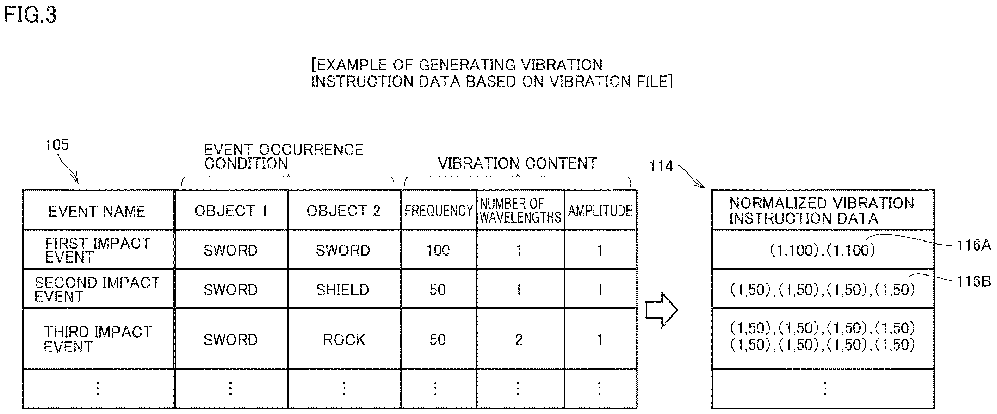

FIG. 3 is a diagram for explaining an example of generating vibration instruction data based on the vibration file 105 in Embodiment 1. "generating vibration instruction data" comprises a meaning that vibration instruction data stored in the vibration file 105 is read out and handled as data for vibrating the vibration motor. The generation of the vibration instruction data comprises not only an aspect of reading out vibration instruction data stored in advance, but also an aspect of generating vibration instruction data by calculation, etc. FIG. 3 illustrates an example in which normalized vibration instruction data 114 is generated based on the occurrence of the impact vibration event. Vibration instruction data comprises a value specifying a frequency (hereinafter, a frequency value) and a value specifying an amplitude (hereinafter, an amplitude value). One frequency value and one amplitude value are comprised in one vibration instruction data. The frequency value and the amplitude value may be respectively referred to as frequency instruction data and amplitude instruction data. The processor 101 generates normalized vibration instruction data 114 based on the vibration file 105.

In an example, the amplitude value is normalized in the vibration file 105 and the vibration instruction data 114. Meanwhile, in an example, the frequency value is not normalized. In an example, the amplitude value takes a value between 0 and 1. After that, the processor 101 executes total adjustment processing, frequency characteristic adjustment processing, and clamp adjustment processing on the normalized amplitude value in the vibration instruction data 114, and adjusts the amplitude value, as described in detail later. The adjustment processing is not essential. In particular, the clamp adjustment processing does not need to be executed when frequency characteristic adjustment processing is executed by the processor 202 on the game controller 200 side (described later). Normalizing the amplitude value is not essential. Also, content of the adjustment processing may differ depending on the type of the vibration motor 206 connected to the game apparatus 100, as described later.

Total adjustment processing is adjustment processing for prorating amplitude values of two pieces of vibration instruction data with reference to 1.0 when two pieces of vibration instruction data are generated to vibrate the vibration motor 206 at a certain one same timing. When the connected game controller 200 is the first controller having the first vibration motor, frequency characteristic adjustment processing is adjustment processing for adjusting the amplitude value comprised in the vibration instruction data according to the maximum allowable voltage to be input at the frequency, which is specified according to the frequency value comprised in the vibration instruction data. When the connected game controller 200 is the second controller having the second vibration motor, frequency characteristic adjustment processing is adjustment processing for making the intensity of vibration applied to the user holding the second controller close to the intensity of vibration applied to the user holding the first controller.

In an example embodiment, the second controller is less sensitive to vibrate than the first controller due to, for example, a weight of the second controller being heavier than a weight of the first controller, etc. Therefore, the intensity of vibration generated when certain vibration instruction data is input to the second controller may be weaker than the intensity of vibration generated when the certain vibration instruction data is input to the first controller. For example, even if vibration instruction data capable of minutely vibrating the first controller is input to the second controller, the second controller may not vibrate.

In an example embodiment, the intensity of vibration applied to the user holding the second controller can be made close to the intensity of vibration applied to the user holding the first controller by frequency characteristic adjustment processing for the second controller described later. The adjustment performed by frequency characteristic adjustment processing is not limited to adjustment that increases the intensity of vibration of the second controller, and may be adjustment that decreases the intensity of vibration of the second controller.

Clamp adjustment processing is adjustment processing for determining an amplitude value capable of suppressing an unintended change in behavior in a process of gradually changing a frequency of the vibration motor 206 when a frequency value comprised in the vibration instruction data is different from a frequency value comprised in the previous vibration instruction data. By performing adjustment processing of the amplitude value, production of a game program can be facilitated, the intensity of vibration can be increased, and the effect of impact vibration can be enhanced. After that, the game apparatus 100 transmits the vibration instruction data 110 after adjustment processing described later to the game controller 200. Content of various data will be described below.

In an example embodiment, the vibration instruction data specifies a vibration effect for a period of T × N (msec) by specifying one or more (N) vibration instruction data for each vibration instruction cycle T (msec) in time series order. By adopting such a data format, a vibration effect in which an amplitude value and a frequency change can be easily specified. A vibration duration may be specified by a duration period or the number of waves.

Next, specific content of various data will be described using FIG. 3. In an example embodiment, the vibration file 105 in the game program 102P2 is referenced by the game apparatus 100, and vibration instruction data 114 is generated.

In an example embodiment, when the amplitude value is "1", the vibration control system 10 causes the amplifier 205 to operate to apply a voltage value corresponding to an upper limit of an output voltage thereof to the vibration motor 206. For example, when a linear design is employed, when the amplitude value is "0.5", the vibration control system 10 applies a voltage value corresponding to 50% of the upper limit of the output voltage of the amplifier 205 to the vibration motor 206. That is, the value of 0 to 1 indicated by the amplitude value in the vibration instruction data 114 does not represent the voltage value itself, but represents a ratio to the upper limit of the output voltage of the amplifier 205. However, as described later, the amplitude value comprised in the vibration instruction data 114 is adjusted by total adjustment processing, frequency characteristic adjustment processing, and clamp adjustment processing.

The game apparatus 100 executes the various adjustment processing described above, and converts the vibration instruction data 114 into the vibration instruction data 110 after adjustment processing described later.

**In** such a flow, the game apparatus 100 generates vibration instruction data 110 after adjustment processing, and transmits the generated vibration instruction data 110 after adjustment processing to the game controller 200. Details about various data will be described below.

**In** the left part of FIG. 3, the vibration file 105 is illustrated as a table. FIG. 3 illustrates an example of the vibration file 105 when the game program 102P2 is an adventure game. In the vibration file 105 in the example of FIG. 3, each of data representing an event name, an event occurrence condition, and vibration content is associated with each other. Data representing the event occurrence condition comprises, for example, types of two objects. Data representing the vibration content comprises a frequency, the number of wavelengths, and an amplitude. Instead of the number of wavelengths, a vibration duration may be specified.

The table illustrating the vibration file 105 in the example of FIG. 3 is a table having an event name as a primary key. An object 1 "sword" and an object 2 "sword" are associated with an event name "first impact event". That is, the first impact event is an event generated by an object representing a sword colliding with another object representing a sword in a virtual space of a game. Also, a frequency "100", the number of wavelengths "1", and an amplitude "1" are associated with the event name "first impact event". That is, it indicates that when the first impact event occurs, a waveform signal of 100 Hz is output to the vibration motor 206 for one wavelength at 100 Hz, with an amplitude being a voltage corresponding to the maximum output voltage of the amplifier 205 at 100 Hz, or the maximum input voltage allowable to be input to the vibration motor 206.

An object 1 "sword" and an object 2 "shield" are associated with an event name "second impact event". That is, the second impact event is an event generated by an object representing a sword colliding with an object representing a shield in the virtual space of the game. Also, a frequency "50", the number of wavelengths "1", and an amplitude "1" are associated with the event name "second impact event". That is, it indicates that when the second impact event occurs, a waveform signal of 50 Hz is output to the vibration motor 206 for one wavelength at 50 Hz, with an amplitude being a voltage corresponding to the maximum output voltage of the amplifier 205 at 50 Hz, or the maximum input voltage allowable to be input to the vibration motor 206.

An object 1 "sword" and an object 2 "rock" are associated with an event name "third impact event". That is, the third impact event is an event generated by an object representing a sword colliding with an object representing a rock in a virtual space of a game. Also, a frequency "50", the number of wavelengths "2", and an amplitude "1" are associated with the event name "third impact event". That is, it indicates that when the third impact event occurs, a waveform signal of 50 Hz is output to the vibration motor 206 for two wavelengths at 50 Hz, with an amplitude being a voltage corresponding to the maximum output voltage of the amplifier 205 at 50 Hz, or the maximum input voltage allowable to be input to the vibration motor 206. The number of wavelengths may not be an integer multiple.

Next, content of the vibration instruction data 114 will be described. In a right part of FIG. 3, the vibration instruction data 114 generated by the processor 101 based on the vibration file 105 is illustrated. In the first impact event, two pieces of vibration instruction data are generated, in the second impact event, four pieces of vibration instruction data are generated, and in the third impact event, eight pieces of vibration instruction data are generated.

In the vibration instruction data 116A illustrated in FIG. 3, "1" is specified as an amplitude value, and "100" is specified as a frequency value. Also, in the vibration instruction data 116B, "1" is specified as an amplitude value, and "50" is specified as a frequency value.

Regarding the vibration instruction data 114 generated based on the occurrence of the first impact event, two pieces of vibration instruction data of "(1, 100), (1, 100)" are arranged in time series. The plurality of vibration instruction data comprised in the vibration instruction data 114 are stored in an order in which the plurality of vibration instruction data are output to the vibration motor 206. A set of vibration instruction data arranged in time series in an order in which the set is output to the vibration motor 206 is referred to as a "time series vibration instruction data collection".

The time series vibration instruction data collection generated based on the occurrence of the second impact event comprises four pieces of vibration instruction data of "(1, 50), (1, 50), (1, 50), (1, 50)". The time series vibration instruction data collection generated based on the occurrence of the third impact event comprises eight pieces of vibration instruction data of "(1, 50), (1, 50), (1, 50), (1, 50), (1, 50), (1, 50), (1, 50), (1, 50)".

The number of vibration instruction data comprised in the time series vibration instruction data collection is specified based on the frequency and the number of wavelengths in the vibration file 105. One vibration instruction data is data indicating that a waveform of a frequency and an amplitude instructed by the vibration instruction data is output to the vibration motor 206 over a period of 5 ms. "100 Hz" is associated with the first impact event in the vibration file 105 as a frequency value. When the vibration motor 206 is vibrated at 100 Hz, a period of one wavelength of the vibration waveform is 10 ms. Therefore, the vibration instruction data 114 generated based on the first impact event comprises two pieces of vibration instruction data obtained by dividing 10 ms by 5 ms.

"50 Hz" is associated with the second impact event in the vibration file 105 as a frequency value. When the vibration motor 206 is vibrated at 50 Hz, a period of one wavelength of the vibration waveform is 20 ms. Therefore, the vibration instruction data 114 generated based on the second impact event comprises four pieces of vibration instruction data obtained by dividing 20 ms by 5 ms.

"50 Hz" is associated with the third impact event in the vibration file 105 as a frequency value. When the vibration motor 206 is vibrated at 50 Hz, a period of two wavelengths of the vibration waveform is 40 ms. Therefore, the vibration instruction data 114 generated based on the third impact event comprises eight pieces of vibration instruction data obtained by dividing 40 ms by 5 ms.

Next, a method of determining a period during which control data is output to the vibration motor 206 by one vibration instruction data will be described. In this disclosure, a period during which control data is output to the vibration motor 206 by one vibration instruction data is referred to as a "vibration instruction cycle". The vibration instruction cycle is specified by the processor 101 according to characteristics of the vibration motor 206. In an example, as described above, the vibration instruction cycle is 5 ms.

The processor 101 executes the game program 102P2 to generate vibration instruction data 114, and passes at least one vibration instruction data 114 to the system program 102P1. The system program 102P1 adjusts the received vibration instruction data 114 by adjustment processing, and converts the received vibration instruction data 114 into the vibration instruction data 110 after adjustment processing. As described above, content of the adjustment processing may be different depending on the type of the game controller 200 connected to the game apparatus 100. First, frequency characteristic data used in frequency characteristic adjustment processing of the first controller will be described below.

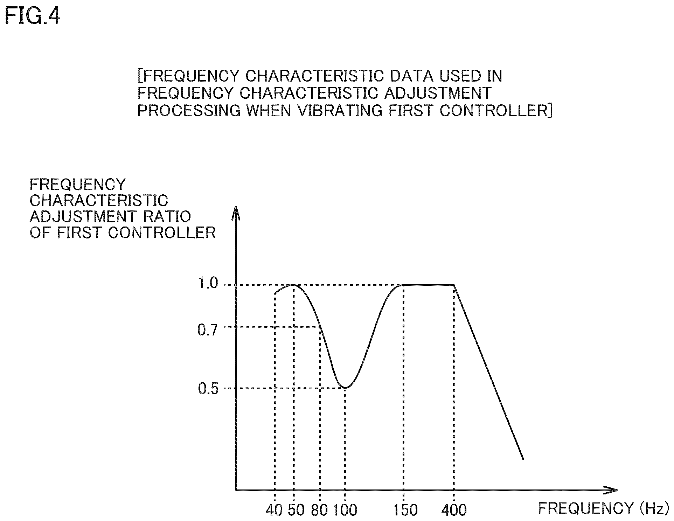

FIG. 4 is a diagram illustrating frequency characteristic data used in frequency characteristic adjustment processing of the first controller. The frequency characteristic data illustrated as a graph in FIG. 4 is data specifying a ratio of the upper limit of the voltage value allowable to be input at each frequency to the maximum output voltage of the amplifier. A frequency characteristic adjustment ratio on the vertical axis is a value calculated by (the upper limit of the voltage value allowable to be input at each frequency) / (the maximum output voltage of the amplifier). The frequency characteristic data is used in frequency characteristic adjustment processing when the type of the game controller 200 connected to the game apparatus 100 is the first controller having the first vibration motor. A range of frequencies in which the vibration motor 206 can operate is specified by characteristics, etc., of the vibration motor 206, and in the first vibration motor in an example embodiment, the range is 40 Hz or more and 400 Hz or less. As illustrated in FIG. 4, the allowable lower limit frequency for driving the first vibration motor in an example embodiment is 40 Hz. In an example embodiment, "allowable lower limit frequency" means a frequency of the first vibration motor that an application program is allowed to use. When the game program 102P2 specifies a frequency other than the range of 40 Hz or more and 400 Hz or less, the frequency is corrected to a value within the range of 40 Hz or more and 400 Hz or less by system software, etc. In an example embodiment, when impact vibration of one wavelength is employed, a frequency of 200 Hz or less is specified.

The first vibration motor has a maximum input voltage specified as a voltage allowable to be input for each frequency, as a characteristic thereof. The upper limit of the input voltage (a voltage input to the first vibration motor) allowable at each frequency may be specified based on an input voltage when displacement of a vibrator of the first vibration motor reaches a limit value. Since the first vibration motor has different vibration amounts with respect to input depending on the frequency, the upper limit of the input voltage (the input voltage when the displacement of the vibrator reaches the limit value) allowable at each frequency is different depending on the frequency. In an example embodiment, the vibration control system 10 comprises the frequency characteristic data illustrated in FIG. 4 for adjusting the amplitude value indicated by the vibration instruction data according to the frequency, in consideration of the upper limits of these input voltages.

A frequency characteristic adjustment ratio of the first controller illustrated as the vertical axis in FIG. 4 is a value obtained by dividing the upper limit of the input voltage allowable at each frequency by the upper limit of the output voltage of the amplifier 205, and can take a value in a range of 0 to 1. It can be said that a frequency with a low frequency characteristic adjustment ratio is a frequency at which a vibration amount of the vibrator with respect to the input voltage is large.

Data corresponding to the graph of FIG. 4 may be comprised in at least one of the system program 102P1 or the game program 102P2. As illustrated in FIG. 4, the first vibration motor in Embodiment 1 has good vibration efficiency when operating at 100 Hz, and inputting a large voltage at this frequency causes the vibration to be too strong, so the frequency characteristic adjustment ratio decreases to 0.5 when operating at 100 Hz, and at a frequency where the vibration efficiency is poor, the frequency characteristic adjustment ratio is increased to prevent the vibration from becoming weak, and the first vibration motor has a characteristic that the allowable voltage value gradually decreases when operating at 400 Hz or more.

Next, it will be described that the processor 101 executes the adjustment processing described above on the amplitude value in the vibration instruction data 114 to generate vibration instruction data 110 after adjustment processing. An amplitude value or a frequency value of the instruction vibration data after the adjustment processing has been executed may be referred to as an adjusted amplitude value or an adjusted frequency value.

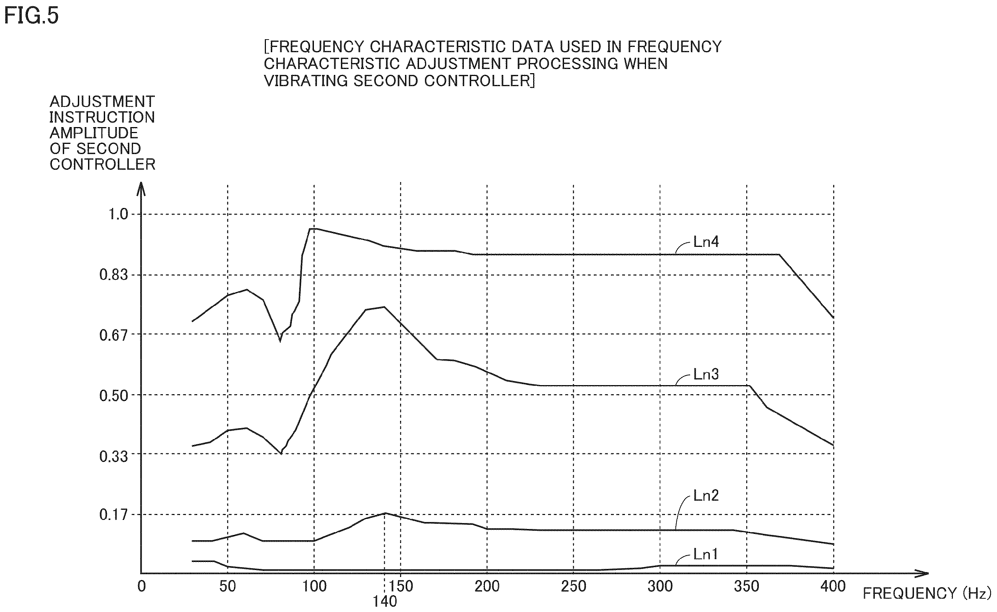

FIG. 5 is a diagram illustrating frequency characteristic data used in frequency characteristic adjustment processing of the second controller. The frequency characteristic data illustrated in FIG. 5 is used in frequency characteristic adjustment processing when the game controller 200 connected to the game apparatus 100 is the second controller having the second vibration motor. The frequency characteristic data illustrated as a graph in FIG. 5 is data specifying an adjustment instruction amplitude at each frequency. The adjustment instruction amplitude on the vertical axis is an amplitude value after frequency characteristic adjustment of the second controller at each frequency.

Lines Ln1 to Ln4 are illustrated in FIG. 5. The line Ln1 is a line indicating a minimum instruction amplitude value for vibrating the second controller at each frequency (a minimum instruction amplitude value at which a user can feel vibration when using the second controller). Meanwhile, each of the lines Ln2 to Ln4 is data for matching an intensity of vibration when the second controller is vibrated using certain vibration instruction data to an intensity of vibration when the first controller is vibrated using the certain vibration instruction data. The intensity of vibration may be a feeling when the user actually holds the game controller 200, or may be an intensity of a vibration level measured by a vibration sensor.

The line Ln2 is a line indicating an adjusted amplitude value when the instruction amplitude is "0.1" and the intensity of vibration is matched to the intensity of vibration when the first controller is vibrated at each frequency. For example, when vibration instruction data specifying an instruction amplitude value "0.1" and an instruction frequency value "140 Hz" is generated, the processor 101 adjusts the instruction amplitude value from "0.1" to "0.17" by referring to the line Ln2 illustrated in FIG. 5. The line Ln3 is a line for matching the intensity of vibration when the instruction amplitude is "0.5". The line Ln4 is a line for matching the intensity of vibration when the instruction amplitude is "1.0". When the instruction amplitude is 0.1 or more and less than 0.5, the processor 101 determines the adjustment instruction amplitude by performing linear interpolation using the line Ln2 and the line Ln3. When the instruction amplitude is 0.5 or more and 1.0 or less, the processor 101 determines the adjustment instruction amplitude by performing linear interpolation using the line Ln3 and the line Ln4. Frequency characteristic adjustment of the second controller will be described later.

Data corresponding to the graph of FIG. 5 and data corresponding to the lines Ln1 to Ln4 of FIG. 5 may be stored in at least one of the system program 102P1 or the game program 102P2. In an example embodiment, although not illustrated in FIG. 5, data indicating a minimum instruction amplitude value for vibrating the first controller (a minimum instruction amplitude value at which a user can feel vibration when using the first controller) is stored in a storage medium accessible by the processor 101. The data indicating the minimum instruction amplitude value for vibrating the first controller stores a minimum instruction amplitude value at each frequency, similar to the line Ln1. In an example embodiment, the minimum instruction amplitude value for vibrating the first controller is used in frequency characteristic adjustment of the second controller described later. The lines Ln1 to Ln4 and the data indicating the minimum instruction amplitude value for vibrating the first controller are specified in advance by experiments etc. Also, the amplitude value indicated by the line Ln1 and the data indicating the minimum instruction amplitude value for vibrating the first controller may indicate a threshold value between vibration instruction data that can be sensed as vibration and vibration instruction data that is not sensed as vibration, and may be an amplitude value indicating that the amplitude value or more can be sensed as vibration, or may be an amplitude value indicating that the amplitude value or less is not sensed as vibration.

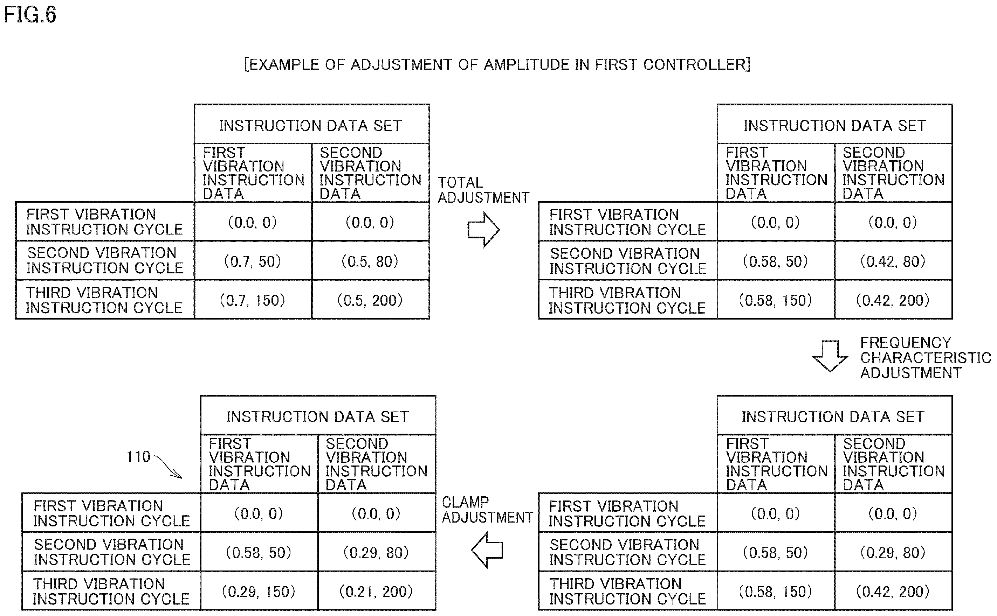

FIG. 6 is a diagram for explaining adjustment processing. FIG. 6 illustrates an example of adjustment processing of data when the game controller 200 connected to the game apparatus 100 is the first controller having the first vibration motor. Adjustment processing is realized by the processor 101 executing the system program 102P1. As described above, in an example embodiment,the vibration control system 10 is configured to be capable of controlling the vibration motor 206 based on two pieces of vibration instruction data. That is, the system program 102P1 is configured to be capable of receiving an instruction data set comprising two pieces of vibration instruction data for a certain timing. In the following, the two pieces of vibration instruction data comprised in the instruction data set are referred to as "first vibration instruction data" and "second vibration instruction data". Also, an amplitude value specified by the first vibration instruction data is referred to as a "first instruction amplitude value", and a frequency value specified by the first vibration instruction data is also referred to as a "first instruction frequency value". Similarly, an amplitude value specified by the second vibration instruction data is referred to as a "second instruction amplitude value", and a frequency value specified by the second vibration instruction data is also referred to as a "second instruction frequency value".

The system program 102P1 processes an instruction data set for each vibration instruction cycle described above. For example, when the first impact event and the second impact event in FIG. 3 occur at the same time, the vibration instruction data 116A may be passed to the system program 102P1 as the first vibration instruction data, and the vibration instruction data 116B may be passed to the system program 102P1 as the second vibration instruction data. In this case, the system program 102P1 causes the vibration motor 206 to vibrate so as to apply to the user vibration that is a combination of vibration by the vibration instruction data 116A and vibration by the vibration instruction data 116B. That is, the system program 102P1 processes the vibration instruction data 116A and the vibration instruction data 116B for one vibration instruction cycle.

In the example of FIG. 6, an example is illustrated in which vibration instruction data different from the example illustrated in FIG. 3 is passed to the system program 102P1 in order to simplify the description of adjustment processing. FIG. 6 illustrates a first vibration instruction cycle, a second vibration instruction cycle, and a third vibration instruction cycle. These periods are continuous periods of 15 ms, and are periods that proceed in time series in the order of the first vibration instruction cycle, the second vibration instruction cycle, and the third vibration instruction cycle. FIG. 6 illustrates an example in which different instruction data sets are passed to the system program 102P1 in each vibration instruction cycle.

First, conversion of vibration instruction data in the first vibration instruction cycle will be described below. In the first vibration instruction cycle, an instruction data set comprising first vibration instruction data specifying a first instruction amplitude value "0.0" and a first instruction frequency value "0", and similarly second vibration instruction data specifying a second instruction amplitude value "0.0" and a second instruction frequency value "0" is passed to the system program 102P1. That is, in the first vibration instruction cycle, no vibration instruction data is passed to the system program 102P1, or vibration instruction data indicating that the vibration motor 206 is not vibrated is passed. In this case, adjustment is not performed in any of the total adjustment processing, the frequency characteristic adjustment processing, and the clamp adjustment processing, and the amplitude value and the frequency are finally converted as vibration instruction data 110 while remaining "0.0".

In the second vibration instruction cycle, an instruction data set comprising first vibration instruction data specifying a first instruction amplitude value "0.7" and a first instruction frequency value "50 Hz", and second vibration instruction data specifying a second instruction amplitude value "0.5" and a second instruction frequency value "80 Hz" is passed to the system program 102P1. When receiving an instruction data set comprising two pieces of vibration instruction data whose amplitude values are not 0, the system program 102P1 executes total adjustment processing to adjust the amplitude value instructed by the first vibration instruction data and the second vibration instruction data. Total adjustment processing is processing for prorating such that a total value of amplitude values instructed by the two pieces of vibration instruction data becomes 1 when a sum of amplitude values instructed by the two pieces of vibration instruction data exceeds 1 in the same vibration instruction cycle.

Specifically, the processor 101 determines whether or not a total value of the amplitude value instructed by the first vibration instruction data and the amplitude value instructed by the second vibration instruction data exceeds 1. When the total value does not exceed 1, the processor 101 terminates the total adjustment processing without changing each amplitude value. When the total value exceeds 1, the processor 101 divides the amplitude value instructed by each vibration instruction data by a total value of amplitude values instructed by each vibration instruction data. The amplitude value of the first vibration instruction data after total adjustment is adjusted to "0.58", and the amplitude value of the second vibration instruction data is adjusted to "0.42".

Next, frequency characteristic adjustment processing will be described. In the frequency characteristic adjustment processing, the amplitude value is adjusted using the frequency characteristic data described in FIG. 4. The processor 101 acquires a frequency characteristic adjustment ratio at the specified frequency value using data corresponding to the graph of FIG. 4. Regarding the first vibration instruction data, the processor 101 specifies that the frequency characteristic adjustment ratio is "1.0" when the vibration motor 206 operates at a frequency of 50 Hz, by referring to the frequency characteristic data corresponding to the graph of FIG. 4. The processor 101 adjusts the amplitude value to "0.58" by multiplying the amplitude value "0.58" instructed by the first vibration instruction data by the frequency characteristic adjustment ratio "1.0". That is, in this case, since the frequency characteristic adjustment ratio of 50 Hz is "1.0", the amplitude value of the first vibration instruction data in the second vibration instruction cycle does not change due to the frequency characteristic adjustment processing.

Similarly, regarding the second vibration instruction data, the processor 101 specifies that the frequency characteristic adjustment ratio is "0.7" when the vibration motor 206 operates at a frequency of 80 Hz. The processor 101 adjusts the amplitude value to "0.29" by multiplying the amplitude value "0.42" instructed by the second vibration instruction data after the total adjustment processing by the frequency characteristic adjustment ratio "0.7". In an example embodiment, the third decimal place is rounded off, but calculation may be performed up to the third decimal place or later.

Next, the first vibration instruction data and the second vibration instruction data in the third vibration instruction cycle will be described. In the third vibration instruction cycle, an instruction data set comprising first vibration instruction data specifying a first instruction amplitude value "0.7" and a first instruction frequency value "150 Hz", and second vibration instruction data specifying a second instruction amplitude value "0.5" and a second instruction frequency value "200 Hz" is passed to the system program 102P1. Also in the third vibration instruction cycle, the amplitude value instructed by the first vibration instruction data and the second vibration instruction data is adjusted by total adjustment, similar to the second vibration instruction cycle. The amplitude value of the first vibration instruction data after total adjustment in the third vibration instruction cycle is adjusted to "0.58", and the amplitude value of the second vibration instruction data is adjusted to "0.42".

Next, the processor 101 specifies that the frequency characteristic adjustment ratio is "1.0" when the vibration motor 206 operates at a frequency of 150 Hz, by referring to the frequency characteristic data corresponding to the graph of FIG. 4. The processor 101 adjusts the amplitude value to "0.58" by multiplying the amplitude value "0.58" instructed by the first vibration instruction data by the frequency characteristic adjustment ratio "1.0". Regarding the second vibration instruction data in the third vibration instruction cycle, the processor 101 specifies that the frequency characteristic adjustment ratio is "1.0" when the vibration motor 206 operates at a frequency of 200 Hz. The processor 101 adjusts the amplitude value to "0.42" by multiplying the amplitude value "0.42" instructed by the second vibration instruction data by the frequency characteristic adjustment ratio "1.0".

Clamp adjustment processing is processing for suppressing an input voltage to the vibration motor 206 from exceeding an allowable value in the process of gradually changing a frequency when the previous instruction frequency value and the current instruction frequency value are different in the game controller 200, as described later. Processing executed in the game controller 200 described later is processing for gradually approaching an amplitude and a frequency instructed from a directly preceding amplitude value and a directly preceding frequency. Clamp adjustment processing is processing for adjusting the first instruction amplitude value and the second instruction amplitude value according to a frequency at which the frequency characteristic adjustment ratio is the lowest (that is, a frequency at which vibration efficiency is the best) when the frequency gradually changes in the vibration instruction cycle.

First, the processor 101 determines a first clamp value and a second clamp value for the first vibration instruction data and the second vibration instruction data, respectively. The clamp value is determined as a frequency at which the frequency characteristic adjustment ratio is the lowest among frequencies between the frequency value of the vibration instruction data in the previous vibration instruction cycle and the frequency value of the vibration instruction data in the current vibration instruction cycle. When the third vibration instruction cycle is described as an example, regarding the first vibration instruction data, the first instruction frequency value at the time point of the second vibration instruction cycle is 50 Hz, and the first instruction frequency value at the time point of the third vibration instruction cycle is 150 Hz. Returning to FIG. 4, the frequency with the lowest frequency characteristic adjustment ratio among the frequencies between 50 Hz and 150 Hz is 100 Hz. Therefore, the processor 101 determines *"*0.5*",* which is the frequency characteristic adjustment ratio of 100 Hz, as the first clamp value.

Regarding the second vibration instruction data, the second instruction frequency value at the time point of the second vibration instruction cycle is 80 Hz, and the second instruction frequency value at the time point of the third vibration instruction cycle is 200 Hz. Returning to FIG. 4, the frequency with the lowest frequency characteristic adjustment ratio among the frequencies between 80 Hz and 200 Hz is 100 Hz. Therefore, the processor 101 determines "0.5", which is the frequency characteristic adjustment ratio of 100 Hz, as the second clamp value.

Regarding the first vibration instruction data, the processor 101 divides the first instruction amplitude value after frequency characteristic adjustment by a total value of the first instruction amplitude value after frequency characteristic adjustment and the second instruction amplitude value after frequency characteristic adjustment. The processor 101 determines a clamp value by multiplying the divided value by the first clamp value described above. For example, the first clamp value is calculated by (the first clamp value) × (the first instruction amplitude value after frequency characteristic adjustment) / ((the first instruction amplitude value after frequency characteristic adjustment) + (the second instruction amplitude value after frequency characteristic adjustment)), and is "0.29". When the first instruction amplitude value after frequency characteristic adjustment is larger than the determined clamp value, the processor 101 sets the clamp value as the first instruction amplitude value after clamp adjustment. That is, since the amplitude value "0.58" after frequency adjustment is larger than the determined first clamp value "0.29", the processor 101 determines "0.29" as the first instruction amplitude value after clamp adjustment.

Similarly, regarding the second vibration instruction data, the processor 101 divides the second instruction amplitude value of frequency characteristic adjustment by a total value of the first instruction amplitude value of frequency characteristic adjustment and the second instruction amplitude value of frequency characteristic adjustment. The processor 101 multiplies the divided value by the second clamp value. Specifically, the clamp value determined by this calculation is 0.21, and the processor 101 determines this value as the clamp value. Since the amplitude value "0.42" after frequency adjustment is larger than the determined clamp value "0.21", the processor 101 determines "0.21" as the second instruction amplitude value after clamp adjustment.

As a result, the first vibration instruction data after clamp adjustment processing is converted as vibration instruction data 110 specifying a first instruction amplitude value "0.29" and a first instruction frequency value "150", and the second vibration instruction data after clamp adjustment processing is converted as vibration instruction data 110 specifying a second instruction amplitude value "0.21" and a second instruction frequency value "200". The processor 101 stores an instruction data set comprising the vibration instruction data 110 after adjustment processing in the vibration instruction data area 103B3 according to the system program 102P1, and then transmits the instruction data set to the game controller 200 in the stored order. The MCU 201 in the game controller 200 generates control data based on the received converted vibration instruction data 110, and drives the vibration motor 206 based on the control data.

### [E. Procedure of Vibration Instruction Data Generation Processing in the Game Apparatus]

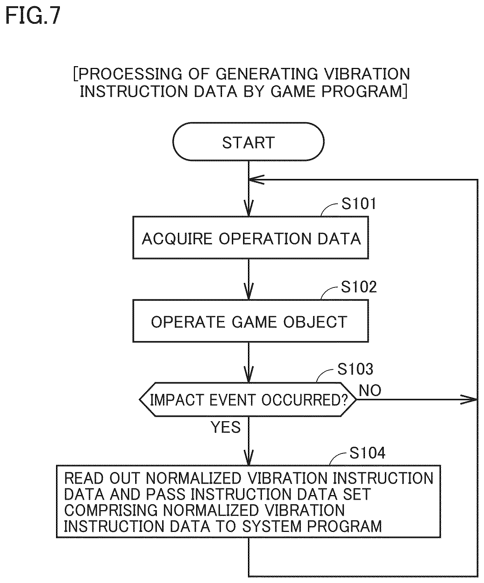

Processing executed by the processor 101 of the game apparatus 100 will be described below using a flowchart. FIG. 7 is a flowchart illustrating the procedure of generating vibration instruction data 114 comprising a normalized amplitude value executed in Embodiment 1. Processing of the flowchart illustrated in FIG. 7 is realized by the processor 101 executing the game program 102P2, and is started according to start of execution of the game program 102P2.

The processor 101 acquires operation data (step S101). The processor 101 operates a game object based on the received operation data (step S102). A game object is an object operated by a user in a virtual space in a game, and may be typically a player character, a car body in a car race game, etc.

The processor 101 determines whether or not an impact event has occurred during the game based on operation of the game object or due to an in-game event unrelated to operation of the game object (step S103). An impact event is an event that is a condition for generating a vibration effect, and comprises various events depending on content of a game, such as a weapon such as a sword that a player character has contacting an enemy object in the example of an adventure game, and a car body operated by a user colliding with another car body, etc., in the example of a car race game.

When an impact event has not occurred in the game (NO in step S103), the processor 101 returns the processing to step S101. When an impact event has occurred in the game (YES in step S103), the processor 101 generates vibration instruction data 114 (typically, a time series vibration instruction data collection), and passes the generated vibration instruction data 114 to the system program 102P1 (step S104). Vibration instruction data (or a time series vibration instruction data collection) may be generated by reading the vibration file 105 described above.

The processor 101 passes the instruction data set comprising the vibration instruction data 114 to the system program 102P1, and returns the processing to step S101, and repeatedly executes the processing of steps S101 to S104 during a period when the game is being executed. When two impact events occur at the same time, the processor 101 passes an instruction data set comprising the first vibration instruction data and the second vibration instruction data to the system program 102P1 based on the two impact events. When one impact event occurs, the processor 101 passes an instruction data set comprising only the first vibration instruction data to the system program 102P1 based on the one impact event. In this case, the processor 101 may comprise second vibration instruction data specifying a second instruction amplitude value "0" and a second instruction frequency value "0" in the instruction data set. The first vibration instruction data and the second vibration instruction data may be generated based on one impact event. The game apparatus 100 may generate vibration instruction data 114 based on the occurrence of the impact event as the game proceeds, and passes the vibration instruction data 114 to the system program 102P1. The processor 101 executes other processing for proceeding with the game after executing step S104.

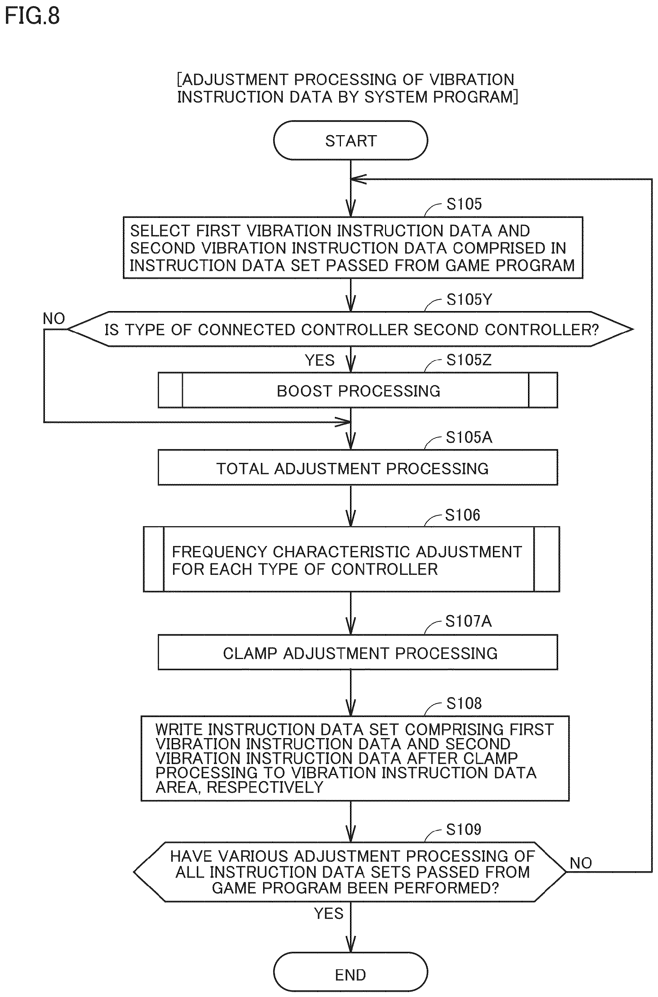

FIG. 8 is a flowchart illustrating the adjustment procedure of vibration instruction data executed by the game apparatus 100 in Embodiment 1. Processing of the flowchart illustrated in FIG. 8 is realized by the processor 101 executing the system program 102P1. In FIG. 8, the adjustment processing described above is executed. The flowchart illustrated in FIG. 8 comprises processing that branches depending on the type of the game controller 200 connected to the game apparatus 100.

The flowchart illustrated in FIG. 8 is executed based on the instruction data set being passed from the game program 102P2 to the system program 102P1. The processor 101 selects the first vibration instruction data and the second vibration instruction data passed from the game program 102P2 (step S105).

The processor 101 determines whether or not the type of the connected game controller 200 is the second controller (step S105Y). When the type is the type of the connected game controller 200, the processor 101 executes boost processing (step S105Z).

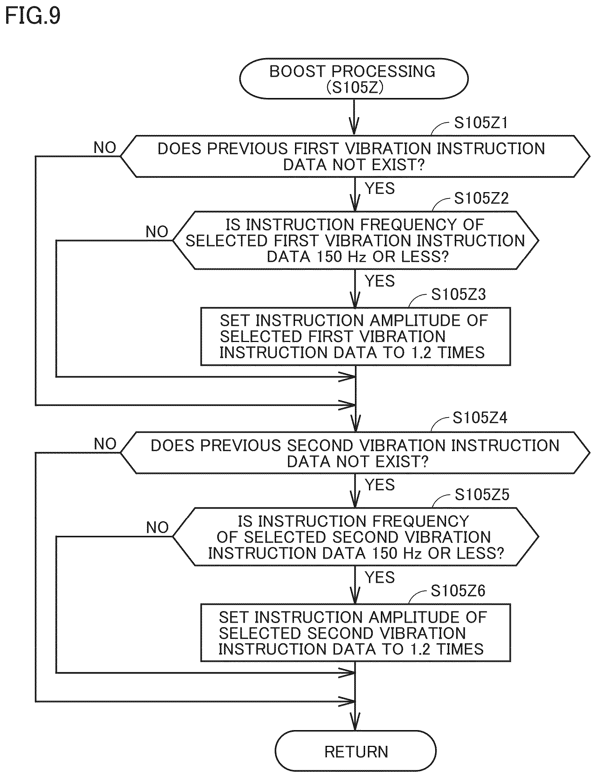

FIG. 9 is a flowchart illustrating the procedure of boost processing (step S105Z). In the boost processing illustrated in step S105Z, the processor 101 determines whether or not the previous first vibration instruction data exists (step S105Z1). That is, the processor 101 determines whether or not vibration based on the first vibration instruction data has occurred in the previous vibration instruction cycle. When the previous first vibration instruction data does not exist (YES in step S105Z1), the processor 101 determines whether or not an instruction frequency of the selected first vibration instruction data is 150 Hz or less in the current vibration instruction cycle (step S105Z2).

When the instruction frequency of the first vibration instruction data is 150 Hz or less (YES in step S105Z2), the processor 101 sets an instruction amplitude of the selected first vibration instruction data to 1.2 times in the current vibration instruction cycle (S105Z3). In step S105Z3, when a result of setting to 1.2 times exceeds "1.0", the processor 101 corrects the instruction amplitude to "1.0". When the previous first vibration instruction data exists (NO in step S105Z1), or when the instruction frequency of the selected first vibration instruction data exceeds 150 Hz (NO in step S105Z2), the processor 101 does not execute the processing of S 105Z3. In steps S105Z4 to step S105Z6, processing in steps S105Z1 to S105Z3 is executed on the second vibration instruction data. Since the processing in steps S105Z4 to S105Z6 and the processing in steps S105Z1 to S105Z3 are merely different in the object of processing, description thereof is not repeated.

Each processing of step S105Z1 and step S105Z4 comprises at least one of processing for determining that an amplitude instructed by the previous amplitude instruction data is zero, processing for determining that an amplitude instructed by the previous amplitude instruction data is substantially zero, processing for determining that the previous control amplitude is zero, and processing for determining that the previous control amplitude is substantially zero. It may be determined that any one condition of the processing is satisfied, or a plurality of processing may be executed to determine that at least one condition is satisfied. Substantially zero comprises that the amplitude is equal to or less than a threshold value near zero.

Thus, in an example embodiment, when the second controller is connected and vibration based on the vibration instruction data is started, boost processing for setting the instruction amplitude to 1.2 times is executed. Even when starting vibration of the second controller that is less sensitive to vibrate than the first controller, vibration can be started with a good initial response. In the example of FIG. 8, an example in which boost processing is executed only for a period of 5 ms, which is one vibration instruction cycle, is illustrated, but a period during which boost processing is executed is not limited to a period of 5 ms. For example, boost processing may be continuously executed for a period of 15 ms, which is three vibration instruction cycles. The instruction amplitude is not updated to 1.2 times from the first vibration instruction cycle, but may be gradually increased by control such that the first vibration instruction cycle is 1.1 times and the second vibration instruction cycle is 1.2 times.

Also, the second vibration motor of the second controller has a slow rise when vibrating at a frequency of 150 Hz or less. Therefore, as illustrated in step S105Z2, by setting the instruction amplitude to 1.2 times only when the instruction frequency is 150 Hz or less, processing can be executed only when necessary, and a processing load can be reduced. The processing of step S105Z2 may not necessarily be executed, and the instruction amplitude may be set to 1.2 times regardless of the frequency. Also, when the game apparatus 100 generates only one vibration instruction data as vibration instruction data for vibrating the vibration motor 206 at a certain timing, boost processing may be executed on the one vibration instruction data.

Subsequently, returning to FIG. 8, the processor 101 executes total adjustment processing on the first vibration instruction data and the second vibration instruction data (step S105A). The total adjustment processing is executed regardless of the type of the connected controller.

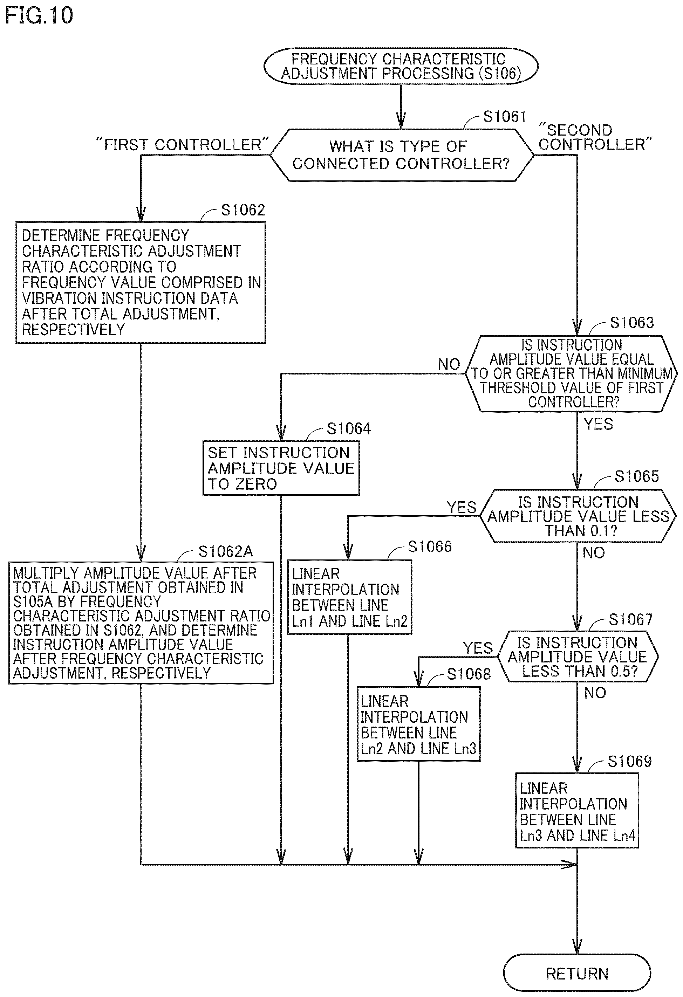

Next, the processor 101 determines each frequency characteristic adjustment ratio according to the first instruction frequency value and the second instruction frequency value respectively comprised in the first vibration instruction data and the second vibration instruction data after total adjustment (step S106). FIG. 10 is a flowchart illustrating the procedure of frequency characteristic adjustment processing (step S106) for each type of the game controller 200. In FIG. 10, the processing of steps S1062 to S1069 is executed for each of the first vibration instruction data and the second vibration instruction data, but illustration of processing for each of the first vibration instruction data and the second vibration instruction data is simplified on the assumption that processing is executed in parallel on the first vibration instruction data and the second vibration instruction data.

The processor 101 determines a type of the connected controller in the frequency characteristic adjustment processing (step S1061). When the type of the connected controller is the first controller, the processor 101 determines a frequency characteristic adjustment ratio based on data corresponding to the graph of FIG. 4. The processor 101 multiplies the first instruction amplitude value and the second instruction amplitude value after total adjustment by the frequency characteristic adjustment ratio corresponding to the first instruction frequency value and the frequency characteristic adjustment ratio corresponding to the second instruction frequency value, respectively, and determines the first instruction amplitude value and the second instruction amplitude value after frequency characteristic adjustment (step S1062A). That is, the frequency characteristic adjustment processing of the first controller described above is executed by step S1062 and step S1062A.

When the type of the controller connected in step S1061 is the second controller, the processor 101 determines an adjustment instruction amplitude based on data corresponding to the graph of FIG. 5. The processor 101 determines whether or not the instruction amplitude value is equal to or greater than a minimum threshold value of the first controller (step S1063). In step S1063, a value corresponding to the instruction frequency is used by referring to data of the "minimum instruction amplitude value for vibrating the first controller" described above, based on the instruction frequency. The game apparatus 100 refers to data indicating the minimum instruction amplitude value for vibrating the first controller at each frequency, and determines whether or not the instruction amplitude value of the vibration instruction data selected in step S105 is higher than the minimum instruction amplitude value. That is, the processor 101 determines whether or not the first controller vibrates when the vibration instruction data selected in step S105 is input to the first controller.

When the instruction amplitude value is less than the minimum threshold value of the first controller (NO in step S1063), that is, when the selected vibration instruction data does not vibrate the first controller, the processor 101 updates the instruction amplitude value of the selected vibration instruction data to zero (step S1064), and returns the processing. When the instruction amplitude value is equal to or greater than the minimum threshold value of the first controller (YES in step S1063), the processor 101 determines whether or not the instruction amplitude value is less than 0.1 (step S1065). When the instruction amplitude value is less than 0.1 (YES in step S1065), the processor 101 determines the adjustment instruction amplitude by performing linear interpolation using the line Ln1 and the line Ln2 in FIG. 5 (step S1066). The processor 101 updates the instruction amplitude value of the selected vibration instruction data to a value of the determined adjustment instruction amplitude, and returns the processing.

When the instruction amplitude value is 0.1 or more (NO in step S1065), the processor 101 determines whether or not the instruction amplitude value is less than 0.5 (step S1067). When the instruction amplitude value is less than 0.5 (YES in step S1067), the processor 101 determines the adjustment instruction amplitude by performing linear interpolation using the line Ln2 and the line Ln3 in FIG. 5 (step S1068). For example, when processing on vibration instruction data specifying an instruction amplitude value "0.3" and an instruction frequency value "300 Hz" is performed, a value between the line Ln2 and the line Ln3 at a frequency "300 Hz" is determined as the adjustment instruction amplitude by linear interpolation with reference to FIG. 5. That is, as illustrated in FIG. 5, the processor 101 determines a value of approximately 0.33 as the adjustment instruction amplitude, updates the instruction amplitude value "0.3" of the vibration instruction data to "0.33", and returns the processing.

When the instruction amplitude value is 0.5 or more (NO in step S1067), the adjustment instruction amplitude is determined by performing linear interpolation using the line Ln3 and the line Ln4 in FIG. 5 (step S1069). For example, when processing on vibration instruction data specifying an instruction amplitude value "0.75" and an instruction frequency value "80 Hz" is performed, a value between the line Ln3 and the line Ln4 at a frequency "80 Hz" is determined as the adjustment instruction amplitude by linear interpolation with reference to FIG. 5. That is, as illustrated in FIG. 5, the processor 101 determines a value of approximately 0.50 as the adjustment instruction amplitude, updates the instruction amplitude value "0.75" of the vibration instruction data to "0.50", and returns the processing. The instruction amplitude is not necessarily updated so as to always increase, and for example, when the instruction amplitude value is "0.5", the instruction amplitude is updated so as to be smaller in a region where the instruction frequency is less than 100 Hz, and the instruction amplitude is updated so as to be larger in a region where the instruction frequency is 100 Hz or more and less than 355 Hz.

Thus, the second controller determines the adjustment instruction amplitude using the graph and the lines illustrated in FIG. 5. The processing for determining the adjustment instruction amplitude updates the amplitude value so as to increase in a region higher than 100 Hz, although depending on a value of the instruction amplitude. In this sense, it can be said that the processing for determining the adjustment instruction amplitude is adjustment that increases the instruction amplitude. Furthermore, in the processing for determining the adjustment instruction amplitude, the adjustment instruction amplitude is determined according to the value of the instruction frequency, but does not exceed "1.0" indicating the maximum amplitude of the second vibration motor at any frequency. In this sense, it can be said that the processing for determining the adjustment instruction amplitude is adjustment such that "1.0" indicating the maximum amplitude is not exceeded.

As described above, each of the lines Ln2 to Ln4 is data for matching an intensity of vibration when the second controller is vibrated using certain vibration instruction data to an intensity of vibration when the first controller is vibrated using the certain vibration instruction data. Also, the second controller in an example is a controller that is less sensitive to vibrate than the first controller. In an example embodiment, when the second controller and the first controller are vibrated with the instruction amplitude value "0.5", the intensity of vibration in the second controller is weaker than the intensity of vibration in the first controller in the entire frequency band. However, when the second controller vibrates in a region of an instruction amplitude value "0.5" and an instruction frequency less than "100 Hz", displacement of a vibrator may exceed a limit value. In an example embodiment, the vibration control system 10 updates the instruction amplitude value to a value less than "0.5" when the instruction frequency is less than 100 Hz. Similarly, when the second controller vibrates in a region of the instruction amplitude value "0.5" and the instruction frequency "350 Hz" or more, displacement of the vibrator may exceed the limit value, so the vibration control system 10 updates the instruction amplitude value to a value less than "0.5" when the instruction frequency is 350 Hz or more. In other words, when the instruction amplitude value is "0.5" and the instruction frequency is "100 Hz" or more and less than "350 Hz", the second controller updates the instruction amplitude value so as to be larger. Also in the line Ln2, similarly, the instruction amplitude value may be updated so as to decrease in consideration of displacement of the vibrator. In an example embodiment, in the line Ln4, the instruction amplitude value is updated to a value less than "1.0" in the entire frequency band, but in other aspects, the instruction amplitude value may be kept at "1.0".

In an example embodiment, adjustment for increasing the instruction amplitude value is performed according to the instruction amplitude instructed by the application. More specifically, when the instruction amplitude instructed by the application has an allowance with respect to the maximum amplitude, the instruction amplitude is adjusted so as to be larger. Thereby, for example, a feeling of vibration can be enhanced in a controller etc., with weak vibration. Also, when the application specifies the instruction amplitude based on the standard controller, a feeling of vibration of the controller with weak vibration can be matched (made close) to a feeling of vibration of the standard controller compared to the standard controller. The instruction amplitude value may be adjusted so as to be smaller according to the instruction amplitude instructed by the application. Thereby, the feeling of vibration can be weakened in a controller etc., with strong vibration. Also, since this control is performed based on the instruction frequency, an appropriate adjustment instruction amplitude can be set for each frequency. For example, the adjustment instruction amplitude can be increased at a frequency with weak vibration, and the adjustment instruction amplitude can be decreased at a frequency with strong vibration. Also, since adjustment processing is switched between being performed and not being performed depending on the controller being used, amplitude adjustment can be performed according to characteristics of the controller. Content of amplitude adjustment may be changed according to the type of the controller. Also, in the case of the second controller, when the instruction amplitude value instructed by the application is equal to or greater than the minimum instruction amplitude value for vibrating the first controller, the instruction amplitude value is converted to be equal to or greater than the minimum instruction amplitude value for vibrating the second controller, so when the application determines the instruction amplitude based on the first controller, the feeling of vibration is not lost when playing the same application using the second controller. Also, the minimum instruction amplitude value for vibrating the first controller and the minimum instruction amplitude value for vibrating the second controller may be different for each instruction frequency, but, since different data is used for the minimum instruction amplitude value for each instruction frequency, processing according to the instruction frequency can be performed. Also, when the value is smaller than the minimum instruction amplitude value for vibrating the first controller, the instruction amplitude value is set to zero, so wasteful control is not performed.

Branch processing of steps S1063, S1065, and S 1067 corresponds to the number of lines comprised in the graph of FIG. 5. The number of lines comprised in the graph of FIG. 5 is not limited to four, and may be a number exceeding four, such as five, eight, etc., or may be a number less than four, such as two, three, etc. In a certain aspect, when the instruction amplitude value is "1.0", frequency characteristic adjustment of the second controller may not be executed. In this case, the instruction amplitude value is kept at "1.0". That is, the processor 101 vibrates the second controller with maximum output. Also, when the instruction amplitude value is less than 0.5, frequency characteristic adjustment of the second controller may not be executed. In this case, the instruction amplitude value is kept at 0.5 or more. In step S1067, the instruction amplitude value may be updated only when the instruction amplitude value is less than 0.5. That is, when the instruction amplitude value is 0.5 or more, adjustment using the graph of FIG. 5 may not be performed.

Furthermore, the processor 101 executes clamp adjustment processing on each of the first instruction amplitude value and the second instruction amplitude value after frequency characteristic adjustment (step S107A). The processor 101 writes an instruction data set comprising the first vibration instruction data and the second vibration instruction data after clamp adjustment processing to the vibration instruction data area 103B3 (step S108). The processor 101 determines whether or not all instruction data sets passed from the game program 102P2 have been processed (step S109). When writing the first vibration instruction data indicating that the amplitude value is zero in step S108, and when the amplitude value instructed by the last written first vibration instruction data is zero, the processor 101 does not perform processing for writing the first vibration instruction data indicating that the amplitude value is zero. That is, writing processing again is omitted. Similar processing is performed on the second vibration instruction data. Thereby, transmission of the first vibration instruction data indicating that the amplitude value is continuously zero from the game apparatus 100 to the game controller 200 is suppressed, and a processing load in the vibration control system is reduced.

Regarding a case where the first controller is connected, clamp adjustment processing using the graph of FIG. 4 is performed as described in FIG. 6. Meanwhile, regarding a case where the second controller is connected, clamp adjustment processing using the line Ln1 of FIG. 5 is performed. The processor 101 specifies the smallest adjustment instruction amplitude in a period from the previous instruction frequency to the current instruction frequency among the adjustment instruction amplitudes indicated by the line Ln4. The processor 101 compares the specified adjustment instruction amplitude and a value of the instruction amplitude updated in step S106. When the value of the instruction amplitude updated in step S106 is larger than the specified adjustment instruction amplitude, the processor 101 updates the instruction amplitude value to the specified adjustment instruction amplitude.

More specifically, with reference to FIG. 5, when the previous frequency value is 50 Hz and the current frequency value is 150 Hz, the processor 101 specifies that the smallest adjustment instruction amplitude indicated by the line Ln4 in a period of 50 Hz to 150 Hz is "0.66". When the instruction amplitude value of the vibration instruction data selected this time is 0.66 or more, the processor 101 updates the instruction amplitude value to 0.66. Thereby, an unintended change in behavior in a process of gradually changing the frequency described later can be suppressed.

Returning to FIG. 8, when adjustment processing is not performed on all the vibration instruction data 114 (NO in step S109), the processor 101 returns the processing to step S105. When adjustment processing of all the vibration instruction data 114 is completed (YES in step S109), the processor 101 terminates the processing of the flowchart. Thereby, the vibration instruction data 110 after adjustment processing as illustrated in a lower left part of FIG. 6 is written to the vibration instruction data area 103B3.

The processor 101 transmits the vibration instruction data 110 after adjustment processing stored in the vibration instruction data area 103B3 to the game controller 200 via the communication interface 104. The game controller 200 stores the received vibration instruction data 110 after adjustment processing in the vibration instruction data area 204B1 in the volatile memory 204.

### [F. Control Data Generation Processing Procedure in the Game Controller]

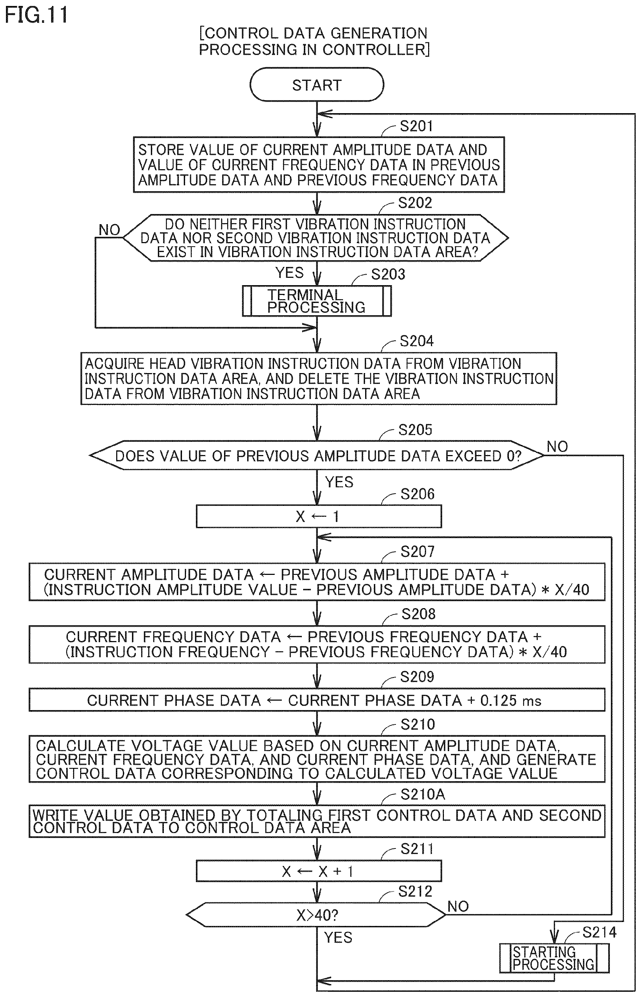

Processing executed by the MCU 201 of the game controller 200 will be described below using a flowchart. FIG. 11 is a flowchart illustrating the processing procedure of control data generation executed by the game controller 200 in Embodiment 1. The flowchart illustrated in FIG. 11 may be executed in common by both the first controller and the second controller, or a part of processing may differ depending on the type of the controller. Control data is data generated by the processor 202 based on the first vibration instruction data and the second vibration instruction data after adjustment processing. Control data is typically data indicating a voltage value for driving the vibration motor 206, and is data indicating an instantaneous value, which is a voltage value at each instant of a waveform based on the specified frequency and amplitude. In the following, control data is output at specified intervals, and this interval is referred to as a "control cycle".

In an example embodiment, the control cycle is 0.125 ms, because the amplifier 205 operates at 8 kHz to supply control data to the vibration motor 206 every 0.125 ms, and the period thereof is 0.125 ms. The MCU 201 generates control data of a number obtained by dividing the vibration instruction cycle by the control cycle from one vibration instruction data. In an example embodiment, since the vibration instruction cycle is a period of 5 ms and the control cycle is 0.125 ms, the processor 202 generates 40 pieces of control data from one vibration instruction data. A reference waveform is determined for each control cycle (0.125 ms) based on the frequency value and the amplitude value of the vibration instruction data 110 after adjustment processing. The reference waveform is a waveform determined for each control cycle, and is a waveform for specifying a voltage value output as control data. The processor 202 determines a voltage value output as control data based on the reference waveform.

Processing of the flowchart illustrated in FIG. 11 is realized by the processor 202 executing the MCU program 203P. Processing of the flowchart illustrated in FIG. 11 is started based on, for example, electric power being supplied to the game controller 200.

The volatile memory 204 comprises a current amplitude data area 204V1, a current frequency data area 204V2, and a current phase data area 204V3 for each of the first vibration instruction data and the second vibration instruction data comprised in the instruction data set, and respectively stores current amplitude data, current frequency data, and current phase data. That is, the current amplitude data area 204V1 is configured to be capable of storing first current amplitude data based on the first vibration instruction data and second current amplitude data based on the second vibration instruction data. In the following, when describing the first current amplitude data and the second current amplitude data without distinguishing them, they are simply referred to as "current amplitude data".

Also, the current frequency data area 204V2 is configured to be capable of storing first current frequency data based on the first vibration instruction data and second current frequency data based on the second vibration instruction data. In the following, when describing the first current frequency data and the second current frequency data without distinguishing them, they are simply referred to as "current frequency data". Meanwhile, since current phase data stored in the current phase data area 204V3 is shared by processing of both the first vibration instruction data and the second vibration instruction data, the current phase data area 204V3 is configured to store one piece of current phase data. The current phase data area 204V3 may be configured to be capable of storing first current phase data based on the first vibration instruction data and second current phase data based on the second vibration instruction data. These data are data indicating a current amplitude, a current frequency, and a current phase in control data of the vibration motor 206 that vibrates based on the first vibration instruction data and the second vibration instruction data, respectively.

In step S201, the processor 202 copies a value of the current amplitude data and a value of the current frequency data in each of the first vibration instruction data and the second vibration instruction data to another area of the volatile memory 204. Specifically, the value of the current amplitude data and the value of the current frequency data are stored in the previous amplitude data area 204V4 and the previous frequency data area 204V5 as previous amplitude data and previous frequency data, respectively (step S201).

The previous amplitude data area 204V4 is configured to be capable of storing first previous amplitude data based on the first vibration instruction data and second previous amplitude data based on the second vibration instruction data. In the following, when describing the first previous amplitude data and the second previous amplitude data without distinguishing them, they are simply referred to as "previous amplitude data". The previous frequency data area 204V5 is configured to be capable of storing first previous frequency data based on the first vibration instruction data and second previous frequency data based on the second vibration instruction data. In the following, when describing the first previous frequency data and the second previous frequency data without distinguishing them, they are simply referred to as "previous frequency data". The processor 202 stores "0 V" as a value of the current amplitude data and a value of the previous amplitude data, "0 Hz" as a value of the current frequency data and a value of the previous frequency data, and "0 degrees" as a value of the current phase data, as initialization processing when executing the flowchart illustrated in FIG. 11 for the first time after starting the game controller 200.

The processor 202 determines whether or not an instruction data set exists in the vibration instruction data area 204B1 (step S202). The processor 202 determines whether or not neither the first vibration instruction data nor the second vibration instruction data exists in the vibration instruction data area 204B1 (step S202). When at least one of the first vibration instruction data and the second vibration instruction data exists in the vibration instruction data area 204B1 (NO in step S202), the processor 202 executes the processing of step S204.

When neither the first vibration instruction data nor the second vibration instruction data exists in the vibration instruction data area 204B1 (YES in step S202), the processor 202 executes terminal processing (step S203). Details of the terminal processing will be described later. Next, the processor 202 acquires head vibration instruction data in the instruction data set in the vibration instruction data area 204B1, and deletes the instruction data set from the vibration instruction data area 204B1 (step S204). At the head of the vibration instruction data area 204B1, the instruction data set stored in the vibration instruction data area 204B1 earliest is stored.

In the following, the first instruction amplitude value and the second instruction amplitude value comprised in the instruction data set acquired by the processor 202 in step S204 are referred to as "instruction amplitude value" without distinguishing them. Similarly, the first frequency value and the second frequency value comprised in the instruction data set acquired by the processor 202 in step S204 are referred to as "instruction frequency value" without distinguishing them.

The processor 202 determines whether or not both the value of the first previous amplitude data and the value of the second previous amplitude data stored in step S201 exceed 0 (step S205). When at least one of the value of the first previous amplitude data and the value of the second previous amplitude data exceeds 0 (YES in step S205), it can be determined that the state is a state in which vibration has been continued since before (it is not a start of vibration from a state in which vibration is not performed), and the process shifts to a flow at the time of vibration continuation in step S206 and subsequent steps. As described later, steps S207 to S210 are executed for each of the first vibration instruction data and the second vibration instruction data. Determination as to whether or not vibration is started from the state in which vibration of step S205 is continued is also executed for each of the first vibration instruction data and the second vibration instruction data. In step S206, the processor 202 substitutes 1 into a count variable X (step S206). The count variable X is an area provided in the volatile memory 204, and is a counter variable for repeating processing 40 times in order to generate 40 pieces of control data.

In the following, generation of first control data corresponding to the first vibration instruction data and second control data corresponding to the second vibration instruction data by updating the first current amplitude data and the second current amplitude data, the first current frequency data and the second current frequency data, and the current phase data using steps S201 to S210 will be described. That is, the processor 202 executes the illustrated processing of steps S201 to S210 on both the first vibration instruction data and the second vibration instruction data. In the flowchart of FIG. 11, for the sake of simple description, it is illustrated such that processing on S201 to S210 of one vibration instruction data is performed. Steps S201 to S210 executed on the first vibration instruction data and steps S201 to S210 executed on the second vibration instruction data may be executed in parallel. As described in step S210A described later, a total of the first control data and the second control data is written as control data to the control data area 204B2.

In the following, steps S207 to S210 will be described focusing only on the first vibration instruction data. In step S207, the processor 202 substitutes a value into the first current amplitude data. In step S207, the processor 202 subtracts the value of the first previous amplitude data from the first instruction amplitude value. The processor 202 multiplies a result of subtraction by a value obtained by dividing a numerical value stored in the count variable X by 40. The processor 202 stores a value obtained by adding the first previous amplitude data to the result of multiplication in the first current amplitude data (step S207).

In step S208, the processor 202 substitutes a value into the first current frequency data. In step S208, the processor 202 subtracts the value of the first previous frequency data from the first instruction frequency. The processor 202 multiplies a result of subtraction by a value obtained by dividing a numerical value stored in the count variable X by 40. The processor 202 stores a value obtained by adding the value of the first previous frequency data to the result of multiplication in the first current frequency data (step S208).

By the processing of steps S207 and S208, the amplitude value and the frequency of the reference waveform referred to in order to generate the first control data are stored in the first current amplitude data and the first current frequency data. In step S209, the processor 202 substitutes a value into the current phase data. Specifically, the processor 202 sets the value of the current phase data to a phase advanced by 0.125 ms based on the value of the first current frequency data.

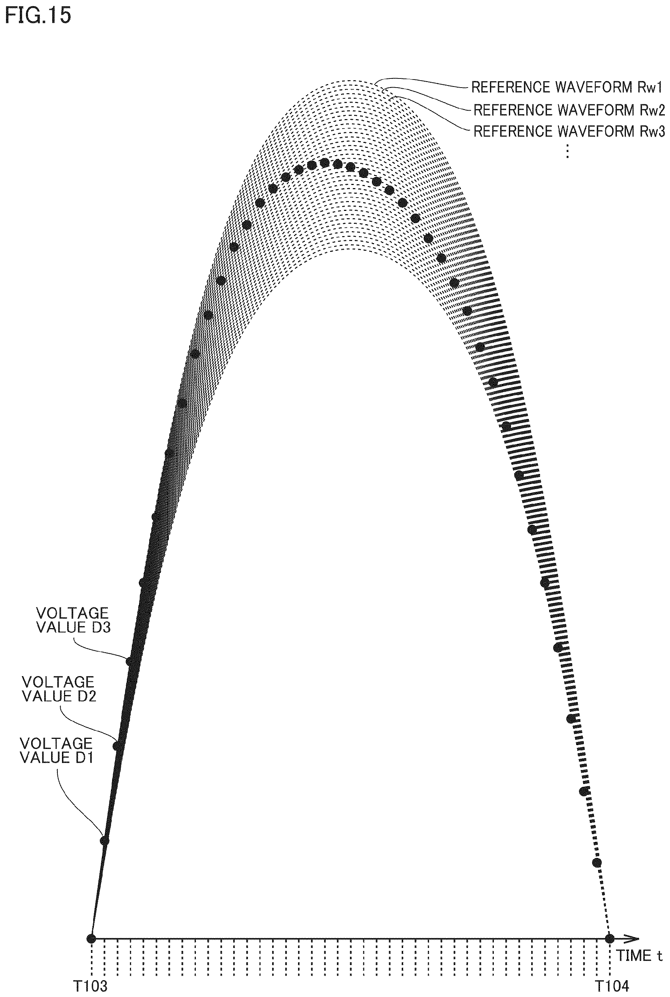

The processor 202 determines the amplitude and the current phase based on the value of the first current amplitude data, the value of the first current frequency data, and the value of the current phase data, and generates first control data corresponding to the calculated voltage value to be output to the amplifier 205 (step S210). More specifically, the processor 202 determines a reference waveform from the value of the first current amplitude data and the value of the first current frequency data, and generates a voltage value at a phase indicated by the value of the first current phase data in the reference waveform as the first control data. The reference waveform will be described in detail in FIG. 15. As described above, the processor 202 also executes steps S207 to S210 on the second vibration instruction data to generate second control data, similar to the first vibration instruction data. The processor 202 writes control data indicating a total voltage value of the voltage value indicated by the first control data and the voltage value indicated by the second control data to the control data area 204B2 (step S210A). Thereby, the vibration motor 206 can vibrate based on both the first vibration instruction data and the second vibration instruction data. Also, in the vibration control system 10, when the vibration motor 206 is vibrated based on the occurrence of one vibration event, the instruction amplitude value and the instruction frequency value of one of the first vibration instruction data and the second vibration instruction data are 0.

Control data written to the control data area 204B2 is transmitted to the amplifier 205 by the I2S unit i2s, and the amplifier 205 amplifies a voltage up to a voltage value corresponding to the control data written to the control data area 204B2, and applies the amplified voltage to the vibration motor 206.

The processor 202 substitutes a value obtained by adding 1 to the current count variable X into the count variable X (step S211). The processor 202 determines whether or not the value of the count variable X exceeds 40 (step S212). When the value of the count variable X does not exceed 40 (NO in step S212), the processor 202 returns the processing to step S207.

When the value of the count variable X exceeds 40 (YES in step S212), the processor 202 returns the processing to step S201. When the value of the count variable X exceeds 40 means that generation of 40 pieces of control data corresponding to the vibration instruction data acquired in step S204 is completed. That is, it means that processing of the acquired instruction data set is completed.

As illustrated as steps S206 to S212, in an example embodiment, , when an amplitude and a frequency are instructed by vibration instruction data, processing for gradually approaching the instructed amplitude and frequency from the directly preceding amplitude value and the directly preceding frequency is performed. This is referred to as interpolation processing. The interpolation processing is not performed at the start of vibration. Also, by the processing of steps S206 to S212, 40 pieces of control data output every 0.125 ms are generated for one vibration instruction data.

Returning to step S205, when the value of the previous amplitude data is 0 (NO in step S205), the processor 202 determines that it is the start of vibration, and executes starting processing (step S214). The case where the value of the previous amplitude data is 0 is a case where the vibration motor 206 starts operating from a stopped state. In step S205, it may be determined that the previous amplitude data is substantially zero. In step S205, instead of determining that the previous amplitude data exceeds 0, it may be determined that the previous control data exceeds 0. In this case, starting processing is executed when the previous control data is determined to be 0 due to the phase, regardless of whether the previous amplitude data is 0 or the previous amplitude data is 0. Also in this case, it may be determined that the value is substantially zero.

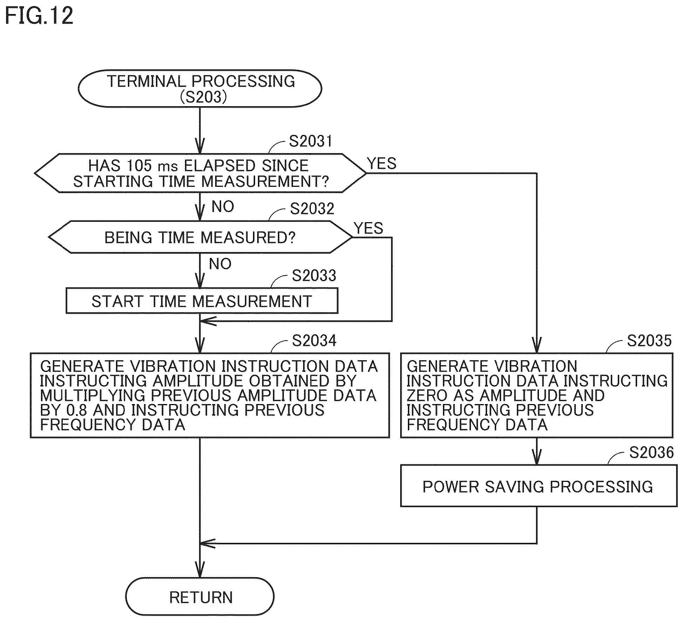

Terminal processing (step S203) and starting processing (step S214) will be described below. FIG. 12 is a flowchart illustrating the procedure of terminal processing (step S203). In FIG. 12, processing of steps S2034 to S20345 is executed for each of the first vibration instruction data and the second vibration instruction data, but illustration of processing for each of the first vibration instruction data and the second vibration instruction data is simplified on the assumption that processing is executed in parallel on the first vibration instruction data and the second vibration instruction data.

The processor 202 determines whether or not 105 ms have elapsed since starting time measurement (step S2031). Time measurement is started in step S2033 described later. When 105 ms have not elapsed since starting time measurement (NO in step S2031), the processor 202 determines whether or not time measurement is currently being performed (step S2032). When time measurement is not being performed (NO in step S2032), the processor 202 starts time measurement (step S2033). That is, time measurement is started when terminal processing is executed for the first time after neither the first vibration instruction data nor the second vibration instruction data exists from a state where at least one of the first vibration instruction data and the second vibration instruction data exists in the vibration instruction data area 204B1.

The processor 202 generates vibration instruction data indicating the previous frequency data, with an amplitude value being a value obtained by multiplying the previous amplitude data by 0.8 (step S2033), and processes the generated data as current vibration instruction data. The processor 202 performs vibration control as current amplitude data, with a value obtained by multiplying the previous amplitude data by 0.8 every 5 ms, during a period until 105 ms elapse after receiving the vibration instruction data stops. That is, vibration of the vibration motor 206 becomes weaker every 5 ms.

When 105 ms have elapsed since starting time measurement (YES in step S2031), the processor 202 generates vibration instruction data indicating the previous frequency data, with an amplitude value being zero or substantially zero (step S2035), and processes the generated data as current vibration instruction data. That is, the processor 202 stops vibration of the vibration motor 206.

Subsequently, the processor 202 executes power saving processing (step S2036). Power saving processing is processing for switching the vibration control system to a power saving mode by controlling communication between the amplifier 205 and the MCU 201. More specifically, in step S2036, the processor 202 stops output from a clock line of the I2S unit i2s. Thereby, electric power consumed by the I2S unit i2s used for output of control data is reduced. In an example embodiment, the amplitude is gradually decreased over a specified period when there is no vibration instruction data. Since the power saving mode is entered after the amplitude becomes zero, it can be compatible with control at the time of terminal.

Meanwhile, in step S2036, the processor 202 does not stop output from a clock line of the I2C unit i2c. As described above, the I2C unit i2c is used to perform setting processing of a register of the amplifier 205. In the power saving mode, if output of the I2C unit i2c is stopped and even register setting of the amplifier 205 is discarded, it takes time until output of the I2C unit i2c is restarted and register setting of the amplifier 205 is performed again. As a result, a start of vibration applied to the user may be delayed. In an example embodiment, in step S2036, output from the clock line of the I2S unit i2s is stopped and output from the clock line of the I2C unit i2c is not stopped, so control data to the amplifier 205 can be output again only by restarting output from the clock line of the I2S unit i2s. For example, when terminating the power saving mode, the processor 202 restarts output from the clock line of the I2S unit i2s within 5 ms. Thereby, output of control data to the amplifier 205 can be quickly restarted.

In the example described above, an example in which it is determined whether or not 105 ms has elapsed regarding time measurement in step S2031 is described, but it may be determined whether or not a period such as 50 ms, 100 ms, or 150 ms has elapsed instead of 105 ms. In an example embodiment, amplitude data continues to be multiplied by 0.8 over 105 ms, and power saving processing is executed on condition that 105 ms have elapsed. However, a period during which amplitude data continues to be multiplied by 0.8 and a period that is a condition for executing the power saving mode may be different periods. Also, the amplitude data may be continuously multiplied by 0.7 times, 0.9 times, etc., instead of 0.8 times.

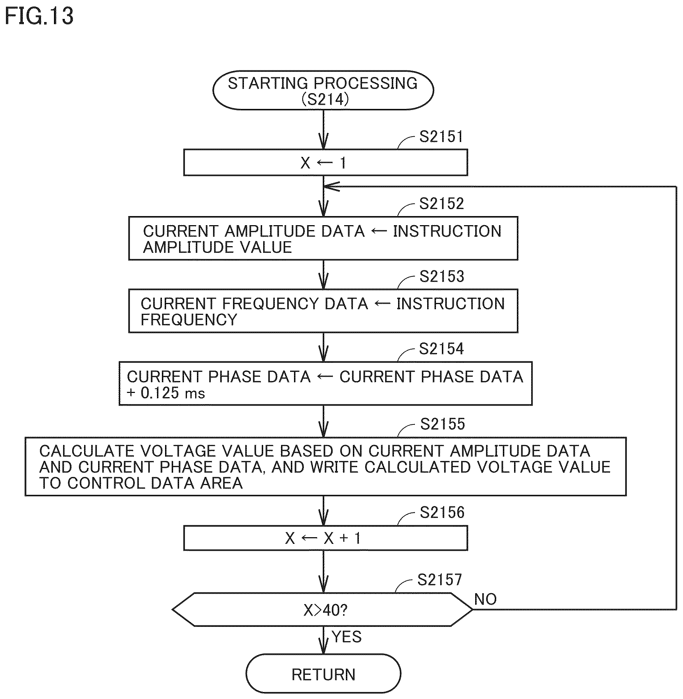

FIG. 13 is a flowchart illustrating the processing procedure of starting processing in step S214. Processing of the flowchart illustrated in FIG. 13 is started by the processor 202 executing step S214 in FIG. 11. That is, in step S205, when either the value of the first previous amplitude data or the value of the second previous amplitude data stored in step S201 is 0, the flowchart of FIG. 13 is executed, and processing is performed on each of the first vibration instruction data and the second vibration instruction data. In the following, the first vibration instruction data will be described, but the same applies to the second vibration instruction data.

The processor 202 substitutes 1 into the count variable X (step S2151). The processor 202 substitutes the first instruction amplitude value into the first current amplitude data (step S2152). Thereby, at the start of vibration, the amplitude value quickly becomes the instructed value, and the effect of impact vibration can be enhanced. Also, the processor 202 substitutes the instruction frequency into the first current frequency data (step S2153). The processor 202 substitutes a phase value advanced by 0.125 ms from a value substituted into the current phase data based on the frequency substituted into the first current frequency data into the current phase data (step S2154).

The processor 202 calculates a voltage value to be output to the amplifier 205 based on the first current amplitude data and the current phase data, and writes first control data corresponding to the calculated voltage value to the control data area 204B2 (step S2155). The processor 202 substitutes a value obtained by adding 1 to the current count variable X into the count variable X (step S2156). After that, the processor 202 determines whether or not the value of the count variable X exceeds 40 (step S2157).

When the value of the count variable X does not exceed 40 (NO in step S2157), the processor 202 returns the processing to step S2152. When the value of the count variable X exceeds 40 (YES in step S2157), the processor 202 terminates the processing of the flowchart of FIG. 13. After that, the processor 202 executes the processing of step S201 in FIG. 11.

The vibration control system 10 may determine control data corresponding to a voltage value for each control cycle, and finely control a vibration waveform. Also, the vibration control system 10 can generate appropriate control data by prorating the first instruction amplitude value and the second instruction amplitude value even when processing both the first vibration instruction data and the second vibration instruction data by total adjustment processing. Furthermore, the vibration control system 10 can operate the vibration motor 206 so that displacement of a vibrator does not exceed a limit value by frequency characteristic adjustment processing. Also, the vibration control system 10 can generate appropriate control data even when gradually changing the frequency by clamp adjustment processing.

When changing an amplitude value, noise may be generated unless the voltage value is changed from 0 V. Therefore, the vibration control system 10 in Embodiment 1 gradually changes the amplitude value in control cycle (0.125 ms) units by execution of steps S207 to S210. Meanwhile, in order to prevent generation of noise, a change in the amplitude value may be waited until the voltage value becomes 0 V, but in that case, a timing of changing the amplitude value becomes late. In an example embodiment, the vibration control system 10 usually suppresses generation of noise by gradually changing the amplitude value or the frequency value in the vibration instruction cycle (5 ms), and in the case where the previous voltage value is 0 V, control is performed such that the amplitude value becomes the instruction amplitude value, so vibration can be generated with good initial response while suppressing generation of noise.

### [G. Example of a Vibration Waveform Generated Based on Vibration Instruction Data]

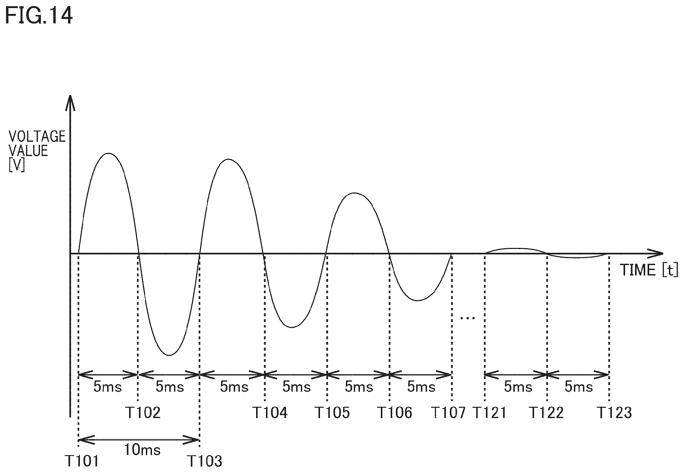

FIG. 14 is an example of a waveform of first control data generated based on the first impact event. The time series vibration instruction data collection based on the first impact event is data of "(1, 100), (1, 100)". In the following, an example in which second vibration instruction data specifying a second instruction amplitude value "0" and a second instruction frequency value "0" and first vibration instruction data based on the first vibration event are processed based on only the first vibration event having occurred will be described.

FIG. 14 illustrates a case where the first controller is connected. Therefore, by the adjustment processing described above being executed, the time series vibration instruction data collection based on the first impact event is converted into data of "(0.5, 100), (0.5, 100)". A vibration waveform generated based on the first impact event is output between timings T101 and T103. A period from the timing T101 to the timing T103 is a period of 10 ms. Between the timings T101 and T103, a vibration waveform corresponding to the amplitude value "0.5 V" of the frequency value "100 Hz" is generated by the flowcharts of FIGS. 11 and 13 being executed. That is, the frequency of the vibration waveform between the timings T101 and T103 is "100 Hz", and the maximum amplitude value is "0.5 V".

A waveform generated between the timings T101 and T102 is generated by the head first vibration instruction data "(0.5, 100)" in the time series vibration instruction data collection based on the first impact event being processed by the processor 202. A waveform generated between the timings T102 and T103 is generated by the second first vibration instruction data "(0.5, 100)" comprised in the time series vibration instruction data collection based on the first impact event being processed by the processor 202.

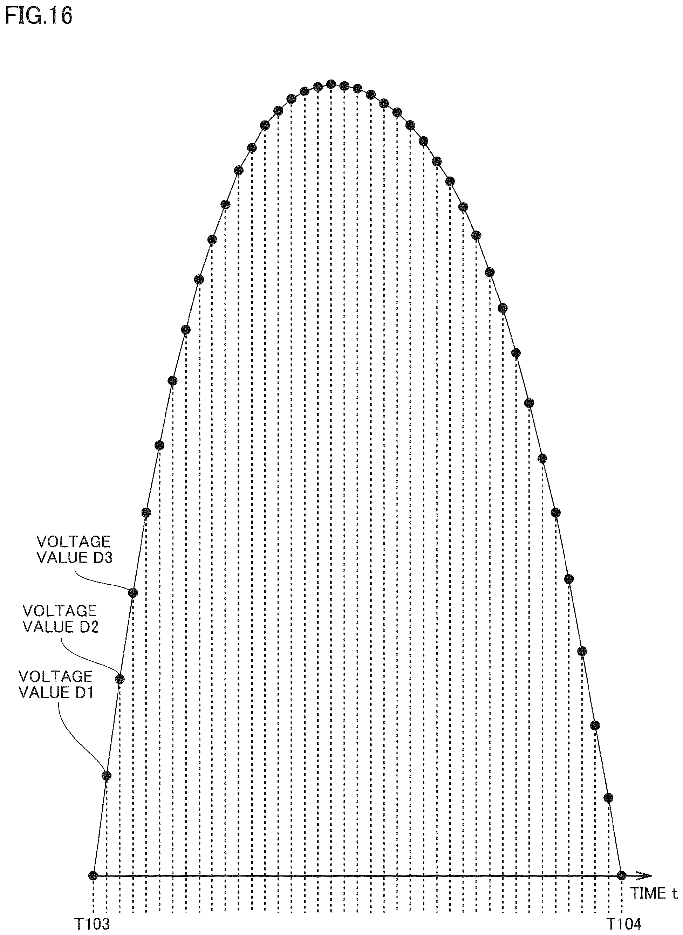

A waveform of control data generated between the timings T103 and T123 is generated by the terminal processing being executed in S203 described above when the vibration instruction data to be processed is lost. In the following, a waveform generated between the timings T103 and T104 will be described using FIGS. 15 and 16. Vibration generated after processing of the vibration instruction data 110 after adjustment processing received from the game apparatus 100 is referred to as "termination vibration". Control data generated between the timings T103 and T104 is an example of control data for generating termination vibration. Also, control data transmitted to the amplifier 205 in order to generate termination vibration is referred to as "terminal control data". In an example embodiment, the processor 202 generates terminal control data such that the vibration motor 206 performs termination vibration immediately after vibration control based on the vibration instruction data 110 after adjustment processing received from the game apparatus 100 is terminated. The processor 202 may generate termination vibration after vibration based on vibration instruction data generated by occurrence of a normal vibration event, instead of an impact vibration event.

With reference to FIGS. 11 and 12, when processing of the vibration instruction data 110 after final adjustment processing of the time series vibration instruction data collection is terminated based on the first impact event and the count variable X exceeds 40 in step S212, the processor 202 stores current amplitude data ("0.5") as previous amplitude data and stores current frequency data ("100 Hz") as previous frequency data in step S201.

Therefore, when all the first vibration instruction data stored in the vibration instruction data area 204B1 are processed and the first vibration instruction data no longer exists (NO in step S202), "0.4", which is 0.8 times "0.5", is set as the instruction amplitude in step S2034, and the frequency "100 Hz" that is the same as the value of the first previous frequency data is set as the first instruction frequency and stored in the first vibration instruction data area. The processor 202 substitutes "1" into the count variable (step S206).

After that, since the first previous amplitude data is "0.5" and the first instruction amplitude value is "0.4", the processor 202 executes the processing of step S207, so a numerical value obtained by subtracting 1/400 from 0.5 is substituted into the first current amplitude data. That is, 0.4975 is substituted into the first current amplitude data. Also, since the first previous frequency data is "100 Hz" and the first instruction frequency is also "100 Hz", the processor 202 substitutes "100 Hz" into the first current frequency data by executing the processing of step S208. The processor 202 advances the current phase data by an amount corresponding to 0.125 ms.

FIG. 15 is a diagram illustrating a reference waveform during timings T103 to T104. In FIG. 15, 40 reference waveforms Rw1, Rw2, Rw3, etc., are illustrated by broken lines. In the following, the 40 reference waveforms Rw1, Rw2, Rw3, etc., are collectively referred to as a "reference waveform Rw". The processor 202 determines the reference waveform Rw1 from the first current amplitude data "0.4975" and the first current frequency "100 Hz". That is, the reference waveform Rw1 is a waveform having a frequency of 100 Hz and a maximum amplitude of 0.4975.

In the processing of step S210, the processor 202 acquires a voltage value D1 when the phase is advanced by 0.125 ms from the timing T13 in the reference waveform Rw1 as the first control data, and writes the voltage value D1 to the control data area 204B2. In FIG. 15, the voltage value D1 is illustrated. The processor 202 increments the count variable X, and a value substituted into the count variable X becomes "2".

An acquisition of a voltage value at a timing when the phase is further advanced by 0.125 ms (a timing advanced by 0.250 ms from the timing T103) by a similar procedure will be described. Since the first previous amplitude data is "0.5" and the first instruction amplitude value is "0.4", the processor 202 executes the processing of step S207, so a numerical value obtained by subtracting 2/400 from 0.5 is substituted into the first current amplitude data. That is, 0.4950 is substituted into the first current amplitude data. Also, since the first previous frequency is "100 Hz" and the first instruction frequency is also "100 Hz", the processor 202 substitutes "100 Hz" into the first current frequency data by executing the processing of step S208. The processor 202 advances the current phase data by 0.125 ms.

The processor 202 determines the reference waveform Rw2 from the first current amplitude data "0.4950" and the first current frequency "100 Hz". The reference waveform Rw2 is a waveform having a frequency of 100 Hz and a maximum amplitude of 0.4950.

In the processing of step S210, the processor 202 acquires a voltage value D2 when the phase is advanced by 0.250 ms from the timing T103 in the reference waveform Rw2 as the first control data, and writes the voltage value D2 to the control data area 204B2. In FIG. 15, the voltage value D2 is illustrated. Furthermore, the processor 202 increments the count variable X, and a value substituted into the count variable X becomes "3".

By a similar procedure, the processor 202 acquires a voltage value D3 when the phase is further advanced by 0.125 ms, and writes the first control data corresponding to the voltage value D3 to the control data area 204B2. The processor 202 repeats output of the first control data 40 times in a period of the timings T103 to T104. FIG. 16 is a diagram illustrating a waveform of termination vibration output as a result of processing in control cycle units corresponding to the period of timings T103 to T104. The processor 202 decreases the maximum amplitude value of the reference waveform Rw and advances the phase over time at each of a plurality of time points in the period of the timings T103 to T104.

In an example embodiment,, control data for stopping vibration of the vibration motor 206 is output to the vibration motor 206 based on termination of vibration control based on the vibration instruction data 110 after adjustment processing received from the game apparatus 100 by the processing of the flowcharts illustrated in FIGS. 11 and 12 being executed. In an example, the period of termination vibration is a period of 100 ms.

As illustrated in FIG. 16, in a period of timings T13 to T14 after vibration control based on the vibration instruction data 110 after adjustment processing is terminated, control data is generated such that the amplitude value of the reference waveform gradually decreases from the amplitude value "0.5" comprised in the vibration instruction data (0.5, 100) processed directly before by the processor 202. In the following, processing in control cycle units for 40 times when the reference waveform Rw gradually changes in the vibration instruction cycle (a period of 5 ms) is referred to as "interpolation processing". In an example, in the period of the timings T103 to T104, the frequency of the reference waveform Rw is always the frequency "100 Hz", and does not change.

Also, in the period of the timings T101 to T103, by the processing of the flowchart illustrated in FIG. 13 being executed, the reference waveform Rw in the period of the timings T101 to T103 always has an amplitude value of "0.5" and a frequency of "100 Hz". Therefore, a sine wave as illustrated in FIG. 14 is generated in the period of the timings T101 to T103.

In vibration control according to the first impact event, since each vibration instruction data comprised in the time series vibration instruction data collection is the same, an effect due to interpolation processing does not appear. However, an amplitude value or a frequency of each vibration instruction data comprised in the time series vibration instruction data collection may vary, and in this case, even while vibration continues, changes in the amplitude value and changes in the frequency value become smooth due to interpolation processing.

As described above, in an example embodiment, control is performed in which the reference waveform Rw gradually changes due to interpolation processing during vibration continuation and at the time of terminal. Meanwhile, in an example embodiment, control in which the reference waveform Rw gradually changes is not performed at the start of vibration. Thereby, at the start, it becomes possible to generate a steep vibration waveform, and it becomes possible to apply vibration corresponding to a collision, an explosion, etc., to a user.

Also, In an example embodiment, , noise generation, such as unintended vibration generation in terms of design, can be suppressed compared to stopping the vibration motor 206 due to inertia without applying control, by generating termination vibration when transitioning from a state in which the vibration motor 206 is operating to a stopped state.

### [H. Modified Example Embodiments]

Other example embodiments partially modified from the example embodiments described above will be described below.

In the example described above, an example in which the vibration control system 10 is applied to a game system has been described, but a system to which application is performed is not limited to a game system. For example, the vibration control system 10 may be used for a practical application other than a so-called video game, a toy for a child, or a training system for virtually driving a vehicle using VR or the like.

In the example described above, a configuration example is illustrated in which a game system applied to the vibration control system 10 comprises one game controller 200, but a game system applied to the vibration control system 10 may comprise a plurality of game controllers 200.

In the example described above, it has been described that a display device connected to the game apparatus 100 is a display such as an organic EL or a head mounted display, but it may be a display device using a hologram, for example.

In the example described above, an example has been described in which processing of a flowchart corresponding to FIGS. 7, 8, and 9 is executed in the game apparatus 100, and processing of a flowchart corresponding to FIGS. 10, 11, and 12 is executed in the game controller 200. However, all processing comprised in the flowcharts of FIGS. 7 to 12 may be executed by either the game apparatus 100 or the game controller 200. Furthermore, processing of the flowchart executed by the game apparatus 100 is not limited to the flowcharts of FIGS. 7, 8, and 9, and may be only the processing of the flowchart of FIG. 7, or may be the processing of the flowcharts of FIGS. 7, 8, 9, and 10.

Also, a processor comprised in the game apparatus 100 and the game controller 200 may be configured with one chip, or may be configured with a plurality of chips.

In the example described above, storing a plurality of data in the same row in the same table was referred to as "associate ". However, the term "associate " is not limited thereto, and comprises that a plurality of data are indirectly associated between a plurality of tables.

In the example described above, in order to simplify description, an example in which vibration instruction data comprised in the time series vibration instruction data collection all have the same content has been described. However, a plurality of vibration instruction data comprised in the time series vibration instruction data collection may each have different content, and for example, the vibration instruction data 114 may comprise data of "(1, 100), (1, 100), (0.7, 50), (0.5, 50)".

In the example described above, an example has been described in which a waveform of control data corresponding to termination vibration is the same frequency as a frequency of control data executed immediately before. However, a vibration waveform corresponding to termination vibration may be a frequency different from the frequency executed immediately before. For example, a frequency of a waveform corresponding to termination vibration may be specified in advance as a frequency such as "40 Hz", "70 Hz", or "200 Hz". In this case, the processor 202 gradually changes the frequency as well as the amplitude value of the reference waveform Rw in interpolation processing.

In the example described above, an example in which a waveform of control data is a sine wave has been described, but it may be a waveform of another shape such as a rectangular wave. Furthermore, the vibration instruction cycle may be a period equal to or less than a length of one wavelength of the lower limit frequency of the vibration motor 206 (25 ms in the example of Embodiment 1), and is not limited to a period of 5 ms. The vibration control system 10 becomes capable of performing fine control by setting the vibration instruction cycle to be shorter.

In the example described above, one vibration instruction data was data that causes power to be output over a period equal to or less than one wavelength of the vibration waveform, but a period during which control data is output by one vibration instruction data may be a period equal to or less than two wavelengths, or a period equal to or less than three wavelengths. Furthermore, in the example described above, the game apparatus 100 and the game controller 200 are provided as separate game systems, but the game apparatus 100 and the game controller 200 may be provided integrally.

In the example described above, the game program 102P2 instructs normalized data for amplitude data, but amplitude data indicating a control voltage value may be directly specified. Also, an example has been described in which frequency characteristic data has the frequency as the horizontal axis and the frequency characteristic adjustment ratio as the vertical axis. However, the vertical axis of the frequency characteristic data may be the upper limit of the input voltage (V) itself at each frequency.

In the example of FIG. 14, a period during which vibration continues when there is one impact event (a period of timings T101 to T103) was a period of 10 ms. However, a period during which vibration continues when there is one impact event may be another period as long as it is a period of 50 ms or less. A method of specifying a period of substantially 50 ms or less by specifying a number of waves or a number of vibration instruction data, or a method of directly specifying time may be used.

Also, the vibration instruction data may specify data of a change amount of amplitude and a change amount of frequency. In that case, processing for calculating the current amplitude and frequency using the values of the directly preceding amplitude and the directly preceding frequency is performed by the processor. This processing may be performed by a processor of the game machine, or may be performed by a processor of the game controller.

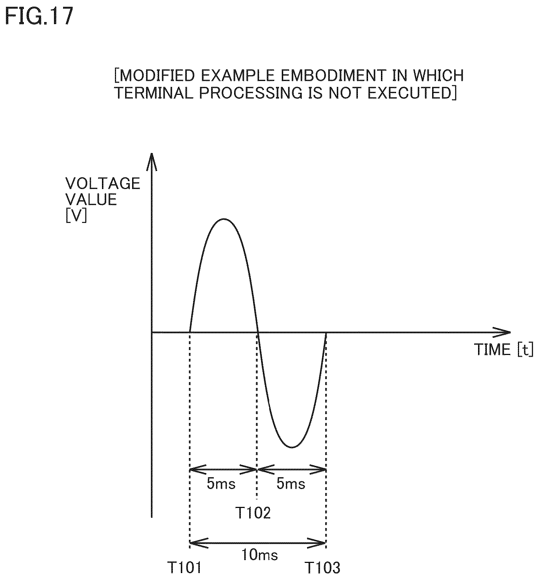

In the example of FIG. 14 described above, an example has been described in which termination vibration is generated at timings T103 to T123, and then control data with a voltage value of zero continues to be output at timing T123 and thereafter. However, output of control data with a voltage value of zero may be started from the timing T103 without generating termination vibration. FIG. 17 is a diagram illustrating a waveform of one modified example embodiment. That is, in one modified example embodiment, control data with a voltage value of zero is immediately output after vibration by vibration instruction data instructed by the game program 102P2 is terminated (after timing T103 in FIG. 17). Also, control data with a phase opposite to the directly preceding phase may be output after vibration by vibration instruction data instructed by the game program 102P2 is terminated (for example, after timing T103 in FIG. 14). Thus, in Embodiment 1, by terminal control being performed, the vibration motor 206 can be stopped earlier compared to when no control is performed on the vibration motor 206 when vibration instruction data is not input from the game program 102P2. In Embodiment 1, the vibration control system 10 stops the vibration motor 206 within the vibration instruction cycle.

In the example described above, an example has been described in which adjustment processing is executed by the processor 101 in the order of total adjustment processing, frequency characteristic adjustment processing, and clamp adjustment processing. However, the order in which adjustment processing is executed is not limited to this. For example, the processor 101 may execute adjustment processing in the order of clamp adjustment processing, total adjustment processing, and frequency characteristic adjustment processing, or may execute adjustment processing in another order. In Embodiment 1, by the total adjustment processing being executed before the frequency characteristic adjustment processing and the clamp adjustment processing, control emphasizing the frequency characteristics of the vibration motor 206 can be performed.

A plurality of types of game controllers 200 may be applicable to the vibration control system 10. The frequency characteristic data described above may differ depending on the type of the game controller 200. Also, a plurality of types of game controllers 200 may comprise different types of amplifiers 205 and vibration motors 206.

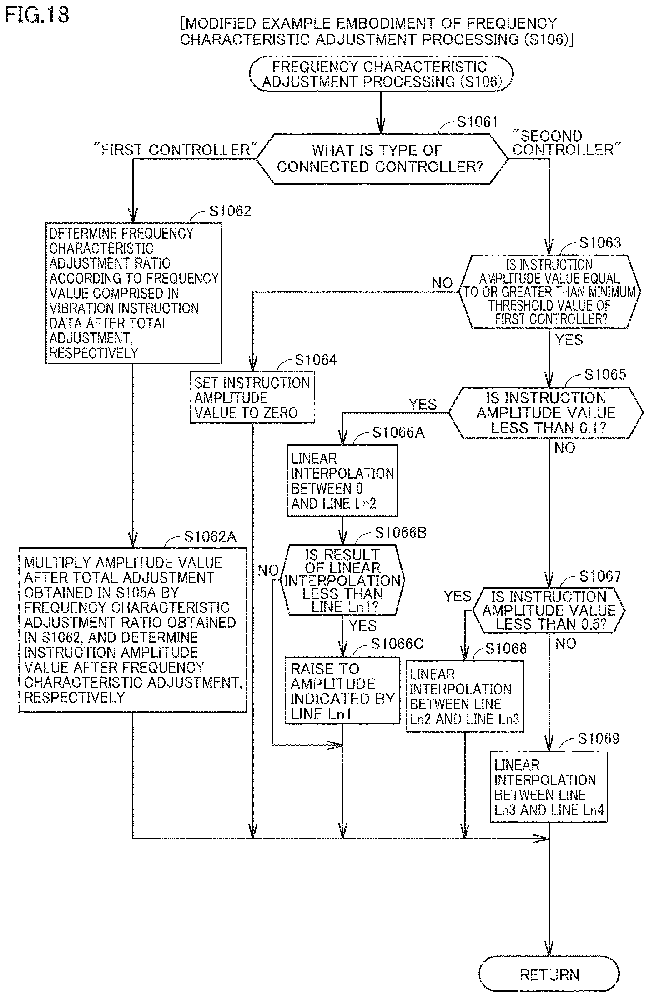

In the example described above, it has been described that when the instruction amplitude value is less than 0.1 in step S1065 in FIG. 10, the adjustment instruction amplitude is determined by performing linear interpolation using the line Ln1 and the line Ln2. However, when the instruction amplitude value is less than 0.1 in step S1065, linear interpolation may be performed using the adjustment instruction amplitude zero and the line Ln2. FIG. 18 is a diagram for explaining one modified example embodiment of frequency characteristic adjustment processing. As illustrated in FIG. 18, in one modified example embodiment, when the instruction amplitude value is less than 0.1 in step S1065 (YES in step S1065), linear interpolation is performed using the adjustment instruction amplitude zero and the line Ln2 (step S1066A) to determine the adjustment instruction amplitude.

After that, the processor 101 determines whether or not the adjustment instruction amplitude determined by the linear interpolation in step S1066A is less than the adjustment instruction amplitude indicated by the line Ln1 (step S1066B) . When the adjustment instruction amplitude is less than the adjustment instruction amplitude indicated by the line Ln1 (YES in step S1066B), since the second controller does not vibrate, the processor 202 raises the adjustment instruction amplitude determined by the linear interpolation in step S1066A up to the adjustment instruction amplitude indicated by the line Ln1 (step S1066C). That is, the processor 202 updates the adjustment instruction amplitude determined by the linear interpolation in step S1066A to the adjustment instruction amplitude indicated by the line Ln1, and returns the processing. When the adjustment instruction amplitude is not less than the adjustment instruction amplitude indicated by the line Ln1 (NO in step S1066B), the processor 202 returns the processing.

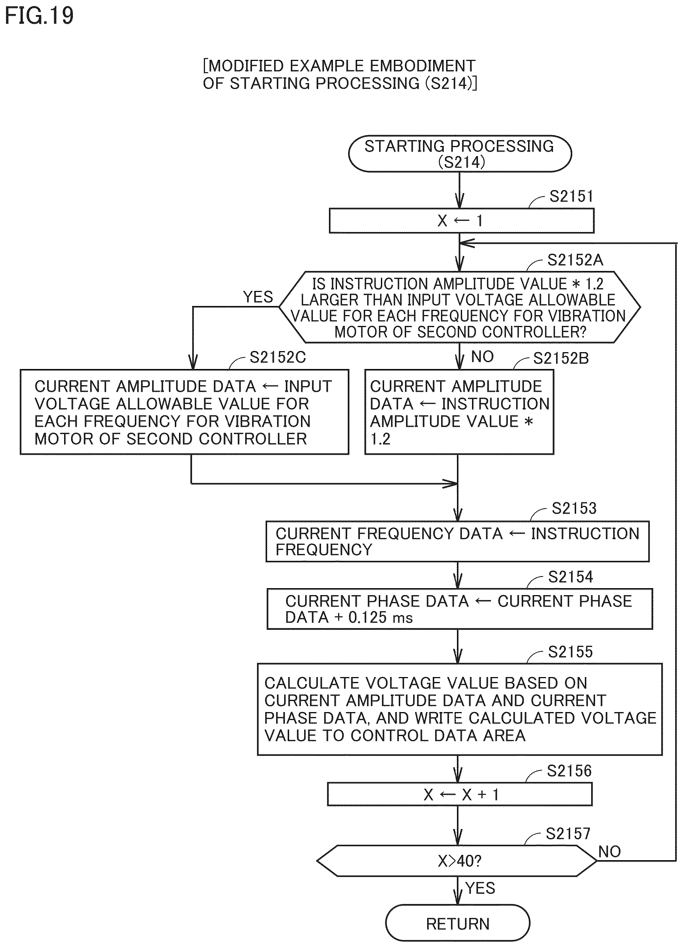

Next, an example in which the boost processing of FIG. 9 is executed in the game controller 200 will be described using FIG. 19. FIG. 19 is a diagram illustrating one modified example embodiment of the processing procedure of starting processing. That is, in one modified example embodiment described in FIG. 19, the connected game controller 200 is the second controller, and processing of step S105Y and step S105Z in FIG. 8 is not executed. As illustrated in FIG. 19, the processor 202 determines whether or not a value obtained by multiplying the instruction amplitude value by 1.2 is larger than an input voltage allowable value for each frequency for the second vibration motor of the second controller in starting processing (S2152A) .

When the value obtained by multiplying the instruction amplitude value by 1.2 is equal to or less than the input voltage allowable value for each frequency for the second vibration motor of the second controller (NO in step S2152A), the processor 202 substitutes the value obtained by multiplying the instruction amplitude value by 1.2 into the current amplitude data (step S2152B). When the value obtained by multiplying the instruction amplitude value by 1.2 is larger than the input voltage allowable value for each frequency for the second vibration motor of the second controller (YES in step S2152A), the processor 202 substitutes the input voltage allowable value of the second vibration motor corresponding to the instruction frequency into the current amplitude data (step S2152C). Thereby, boost processing can be realized by processing on the second controller side. That is, the game apparatus 100 does not need to implement boost processing, and a processing load as the vibration control system is reduced.

### [Embodiment 2]

In Embodiment 1 , a case where the game program 102P2 is an adventure game has been described, but content of the game program 102P2 may be other content. In Embodiment 2 , a case where the game program 102P2 is a music performance game will be described. Furthermore, in Embodiment 2 , the vibration instruction data area 103B3 is configured to be capable of storing one vibration instruction data corresponding to one timing. That is, in Embodiment 2 , an example will be described in which only the first vibration instruction data is stored in the instruction data set, and the second vibration instruction data is not stored. For this reason, in adjustment processing in Embodiment 2 , total adjustment processing for prorating the first instruction amplitude value and the second instruction amplitude value is not executed, and only frequency characteristic adjustment processing and clamp adjustment processing are executed. The clamp adjustment processing in Embodiment 2 is different from the clamp adjustment processing in Embodiment 1 in that proration processing between the first instruction amplitude after frequency characteristic adjustment and the second instruction amplitude after frequency characteristic adjustment is not executed, and it is simply determined whether or not the first instruction amplitude after frequency characteristic adjustment exceeds a first clamp value.

In the example of Embodiment 2 , the game program 102P2 is a music performance game. In a music performance game, the game controller 200 is virtually treated as a predetermined musical instrument. The predetermined musical instrument comprises various musical instruments such as a drum, a cymbal, a triangle, a violin, a trumpet, a piano, or other percussion instruments, stringed instruments, woodwind instruments, brass instruments, and reed instruments. In the example of Embodiment 2 , a musical instrument in the game is played based on input from a user, and vibration is generated according to the musical instrument being played.

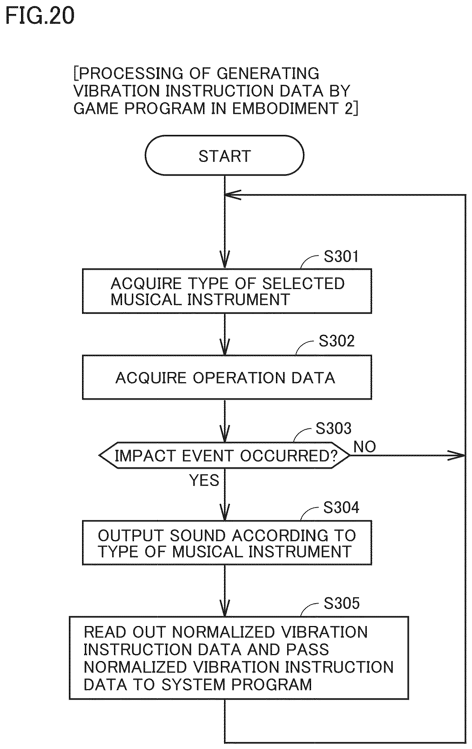

FIG. 20 is a flowchart illustrating the procedure of generating vibration instruction data 114 comprising a normalized amplitude value in the game apparatus 100 in Embodiment 2. Processing of the flowchart illustrated in FIG. 20 is realized by the processor 101 executing the game program 102P2.

Execution of the flowchart illustrated in FIG. 20 is started according to start of execution of the game program 102P2 by the processor 101. The processor 101 acquires a type of a musical instrument selected by a user (step S301) .

The processor 101 acquires operation data (step S302) . The processor 101 determines whether or not an impact event has occurred based on the operation data (step S303). In Embodiment 2 , acquisition of operation data associated in advance for each musical instrument selected in step S301 in step S302 is a condition for generating an impact event.

For example, a condition for generating an impact event when a drum is selected is that a bar-shaped game controller 200 is swung down toward a predetermined direction with an angular velocity within a predetermined range. As another example, a condition for generating an impact event when a piano is selected is that a button on a surface of the game controller 200 is pressed. Thereby, in the musical instrument performance game of Embodiment 2 , the game controller 200 can be likened to a drumstick, and a user can be caused to perform a virtual performance.

When an impact event has not occurred (NO in step S303), the processor 101 returns the processing to step S301. When an impact event has been generated (YES in step S303), the processor 101 outputs sound according to the type of musical instrument (step S304). When a drum is selected, sound when the drum is struck with a drumstick is output.

The processor 101 executes the game program 102P2 to generate vibration instruction data 114 (or a time series vibration instruction data collection), and passes the generated vibration instruction data 114 to the system program 102P1 (step S305) .

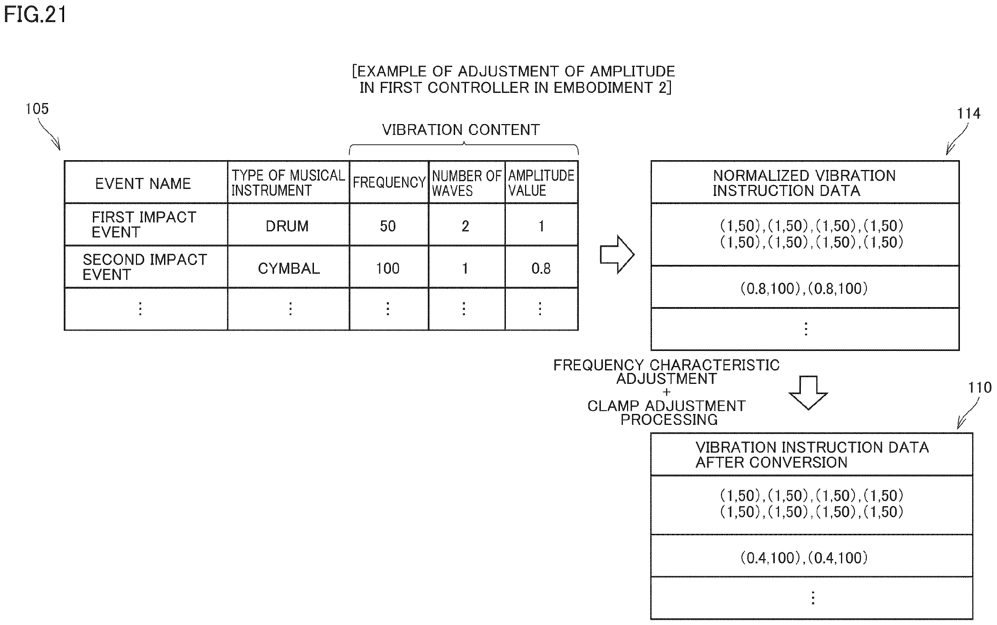

FIG. 21 is a diagram illustrating an example of generating vibration instruction data 110 after adjustment processing based on the vibration file 105 in Embodiment 2.

In the vibration control system 10 in Embodiment 2 , the vibration file 105 in the game program 102P2 capable of executing a music performance game is referred to by the game apparatus 100, and first vibration instruction data 114 is generated. In an upper left part of FIG. 21, the vibration file 105 is illustrated as a table. In the vibration file 105 in the example of FIG. 21, data representing an event name, a type of musical instrument, and vibration content are mutually associated. Data representing the type of musical instrument comprises data indicating a plurality of types of musical instruments that can be selected by the user described above. Data representing vibration content comprises a frequency, a number of wavelengths, and an amplitude, similar to Embodiment 1.

In the event name "first impact event" in Embodiment 2 , the type of musical instrument "drum", the frequency "50", the number of wavelengths "2", and the amplitude "1" are associated. That is, the first impact event in Embodiment 2 is an event that causes a voltage corresponding to a maximum output voltage at which output of the amplifier 205 is allowed to be output to the vibration motor 206 for two wavelengths at a wavelength of 50 Hz.

In the event name "second impact event" in Embodiment 2 , the type of musical instrument "cymbal", the frequency "100", the number of wavelengths "1", and the amplitude "0.8" are associated. That is, the second impact event is an event that causes a voltage corresponding to 80% of the maximum output voltage at which output of the amplifier 205 is allowed to be output to the vibration motor 206 for one wavelength at a wavelength of 100 Hz.

Also in Embodiment 2 , the processor 101 generates vibration instruction data 114 comprising a normalized amplitude value. In Embodiment 2 , a time series vibration instruction data collection generated based on generation of the first impact event comprises eight pieces of vibration instruction data 114 of "(1, 50), (1, 50), (1, 50), (1, 50), (1, 50), (1, 50), (1, 50), (1, 50)". Also, in Embodiment 2, a time series vibration instruction data collection generated based on generation of the second impact event comprises two pieces of vibration instruction data 114 of "(0.8, 100), (0.8, 100)" .

When the type of the connected controller is the first controller, the processor 101 acquires a frequency characteristic adjustment ratio at each frequency using data corresponding to the graph of FIG. 4, and executes frequency characteristic adjustment processing. Also, the processor 101 executes clamp adjustment processing on the instruction vibration value to generate the converted vibration instruction data 114 illustrated in FIG. 21. Regarding the converted vibration instruction data 110 corresponding to the first impact event, the processor 101 specifies that the frequency characteristic adjustment ratio of the vibration motor 206 is "1" when the vibration motor 206 operates at a frequency of 50 Hz, by referring to data corresponding to the graph of FIG. 4. The processor 101 calculates the amplitude value "1" by multiplying the frequency characteristic adjustment ratio "1" by the normalized amplitude parameter "1" in the vibration instruction data 114 corresponding to the first impact event. When the vibration motor 206 is not vibrating when the first impact event has been generated, the processor 101 acquires "1" as a first clamp value for each of the time series vibration instruction data collections generated based on generation of the first impact event. Since each of the time series vibration instruction data collections does not exceed the first clamp value, the processor 202 terminates the clamp adjustment processing without changing the amplitude value "1" after frequency characteristic adjustment.

Regarding the vibration instruction data 110 after frequency characteristic adjustment processing and clamp adjustment processing corresponding to the second impact event, the processor 101 specifies that the frequency characteristic adjustment ratio is "0.5" when the vibration motor 206 operates at a frequency of 100 Hz, by referring to data corresponding to the graph of FIG. 4. The processor 101 calculates an amplitude value "0.4" by multiplying the frequency characteristic adjustment ratio "0.5" by the normalized amplitude value "0.8" in the vibration instruction data 114 corresponding to the second impact event. When the vibration motor 206 is not vibrating when the second impact event has been generated, the processor 101 acquires "0.5" as a first clamp value for each of the time series vibration instruction data collections generated based on generation of the second impact event. Since each of the time series vibration instruction data collections does not exceed the first clamp value, the processor 101 terminates the clamp adjustment processing without changing the amplitude value "0.4" after frequency characteristic adjustment.

As a result, in Embodiment 2 , the processor 101 outputs data of "(1, 50), (1, 50), (1, 50), (1, 50), (1, 50), (1, 50), (1, 50), (1, 50)" as the vibration instruction data 110 after adjustment processing corresponding to the first impact event to the game controller 200. Also, the processor 101 outputs data of "(0.4, 100), (0.4, 100)" as the vibration instruction data 110 after adjustment processing corresponding to the second impact event to the game controller 200. Thus, in Embodiment 2 , vibration matching the selected musical instrument can be applied to a user in the music performance game.

Also, in Embodiment 2 , the amplitude value "0.8" is associated with the cymbal. In an example embodiment, the amplitude value is not limited to "1" as long as it is within a range of 0 to 1.

### [Embodiment 3 ]

In Embodiment 2 , an example in which the game program 102P2 is a music performance game has been described, but content of the game program 102P2 may be other content. In Embodiment 3 , a case where the game program 102P2 is a rhythm game will be described.

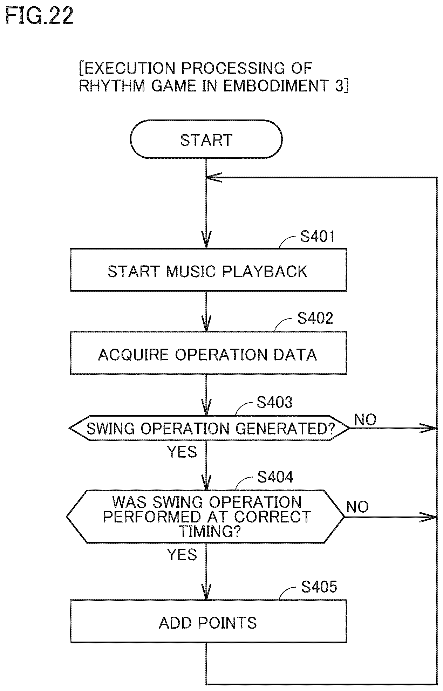

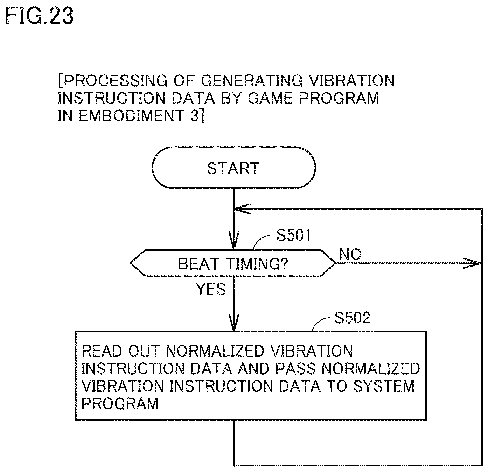

In Embodiment 1 and 2 , an example of generating vibration according to input from a user has been described. However, the vibration control system 10 may generate vibration at a predetermined timing instead of input from a user. In the example of Embodiment 3 , the processor 101 generates the vibration instruction data 110 after adjustment processing by executing the flowchart in FIG. 22 and the flowchart in FIG. 23 in parallel.

The rhythm game of Embodiment 3 is a game that outputs music and tests a user's sense of rhythm by causing the user to perform a predetermined operation at a predetermined timing in the music. The predetermined timing is a timing at which the user should perform an operation. In the game of Embodiment 3 , vibration that is a reference for rhythm is output at specified time intervals. This is called "beat vibration". In Embodiment 3 , an operation that the user should perform at the predetermined timing is an operation of swinging the bar-shaped game controller 200 with a predetermined angular velocity or more. In the following, the operation of swinging the bar-shaped game controller 200 with a predetermined angular velocity or more is referred to as a "swing operation". In the rhythm game of Embodiment 3 , points are added when a swing operation is performed at the predetermined timing, and a final score is displayed to the user when the music is terminated. By beat vibration being output at specified intervals, the user can easily keep the beat. An operation timing of the user may be matched with the beat timing.

FIG. 22 is a flowchart illustrating the execution procedure of the rhythm game in Embodiment 3. Processing of the flowchart illustrated in FIG. 22 is realized by the processor 101 executing the game program 102P2.

The processor 101 starts music playback (step S401) . Music in step S401 may be, for example, classical music, background music of a game, etc. The processor 101 acquires operation data (step S402) . The processor 101 determines whether or not a swing operation has been generated (step S403) .

When a swing operation has not been generated (NO in step S403), the processor 101 executes other processing for proceeding with the rhythm game, and returns the processing to step S401. When a swing operation has been generated (YES in step S403), the processor 101 determines whether or not the swing operation in step S403 has been performed at a correct timing (step S404) .

When the swing operation has not been performed at the correct timing (NO in step S404), the processor 101 executes other processing for proceeding with the rhythm game, and returns the processing to step S401. When the swing operation has been performed at the correct timing (YES in step S404), the processor 101 performs scoring processing in the rhythm game (step S405) . The processor 101 executes other processing for proceeding with the rhythm game after termination of the scoring processing, and returns the processing to step S401.

FIG. 23 is a flowchart illustrating the procedure of generating vibration instruction data 114 comprising a normalized amplitude value in the game apparatus 100 in Embodiment 3. The processor 101 determines whether or not it is a beat timing (step S501). The beat timing is a specified time interval. When it is not a beat timing (NO in step S501), the processor 101 repeats the processing of step S501.

When it is a beat timing (YES in step S501), the processor 101 generates vibration instruction data 114, and passes the generated vibration instruction data 114 (or a time series vibration instruction data collection) to the system program 102P1 (step S502) .

Thus, in Embodiment 3 , vibration is generated at a predetermined timing in music based on music being output, instead of generating vibration based on input from a user. Thereby, in the rhythm game of Embodiment 3 , the timing at which a swing operation should be performed can be recognized by a user using vibration. Furthermore, as described in Embodiment 1 , in the vibration control system 10, strong vibration can be applied by interpolation processing not being executed at the start. Thereby, in Embodiment 3 , a user can be caused to recognize vibration even in the period during which the user is performing a swing operation.

### [Embodiment 4 ]

In Embodiment 1 , an example has been described in which frequency characteristic adjustment processing corresponding to step S106 of FIG. 8 is executed by the processor 101 on the game apparatus 100 side. However, frequency characteristic adjustment processing may be executed by the processor 202 on the game controller 200 side. In Embodiment 4 , description of a configuration overlapping with Embodiment 1 is not repeated.

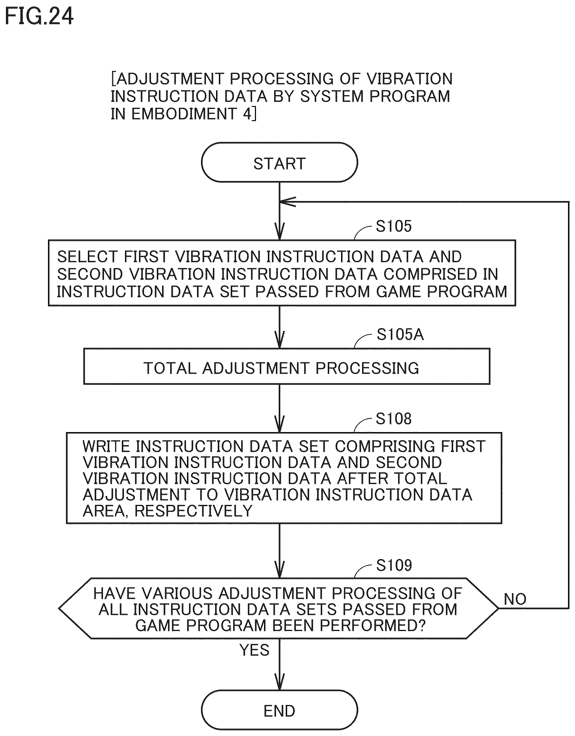

In Embodiment 4 , the processor 202 is configured to be capable of accessing frequency characteristic data illustrated in FIG. 4. For example, the frequency characteristic data illustrated in FIG. 4 may be stored in the non-volatile memory 203 of the game controller 200. FIG. 24 is a flowchart illustrating a conversion procedure of vibration instruction data executed by the game apparatus 100 in Embodiment 4. In Embodiment 4 , the processor 101 does not execute processing of steps S106, S107, and S107A (frequency characteristic adjustment processing, clamp adjustment processing) in Embodiment 1. That is, in Embodiment 4 , only total adjustment processing is executed in the game apparatus 100.

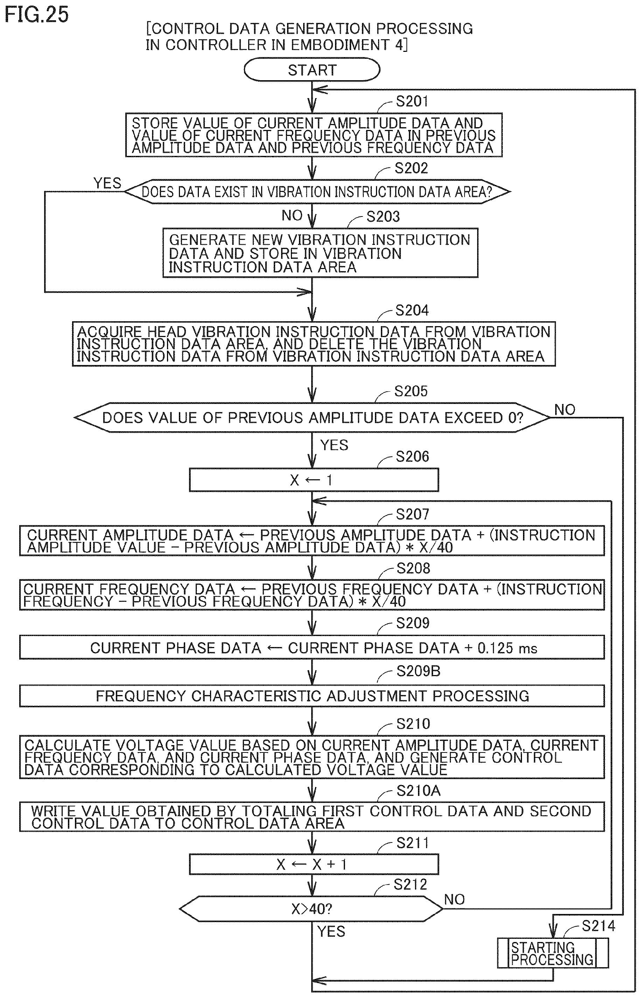

FIG. 25 is a flowchart illustrating the processing procedure of control data generation executed by the game controller 200 in Embodiment 4. In Embodiment 4 , the processor 202 executes frequency characteristic adjustment processing after updating current phase data in step S209 (step S209B) . In step S209B, the processor 202 specifies a frequency characteristic adjustment ratio corresponding to the current frequency data updated in step S208 by referring to the frequency characteristic data, and adjusts an amplitude value of the current amplitude data by multiplying the specified frequency characteristic adjustment ratio by the current amplitude data in step S207. That is, in Embodiment 4 , frequency characteristic adjustment processing is executed for each control cycle instead of for each vibration instruction cycle.

For this reason, even when the frequency instructed by the current vibration instruction data changes from the frequency instructed by the previous vibration instruction data, the processor 202 can execute frequency characteristic adjustment processing for each frequency in the process of change. Therefore, for example, even when gradually changing the frequency from 50 Hz to 150 Hz, frequency characteristic adjustment corresponding to a vicinity of a frequency of 100 Hz during the change can be executed, so in Embodiment 4 , an unintended change in behavior in the process of gradually changing the frequency can be suppressed even without executing clamp adjustment processing, and an appropriate amplitude value according to the frequency can be determined in control cycle units.

### (Additional Aspect)

(Aspect1) A vibration control system comprising: one or more processors; and one or more memories storing instructions that cause one or more processors to perform operations comprising: generating vibration instruction data comprising amplitude instruction data instructing an amplitude of vibration of a vibration motor based on an occurrence of a vibration event; and adjusting a value indicated by the amplitude instruction data according to the amplitude instructed by the amplitude instruction data; and controlling the vibration motor based on the adjusted value.

(Aspect 2) The vibration control system according to aspect 1, wherein: the adjusting comprises increasing the value indicated by the amplitude instruction data when the amplitude instruction data instructs a value smaller than the maximum amplitude.

(Aspect 3) The vibration control system according to aspect 1, wherein: the adjusting comprises increasing the value indicated by the amplitude instruction data when the amplitude instruction data instructs less than or equal to half of a maximum amplitude.

(Aspect 4) The vibration control system according to aspect 1, wherein: the vibration instruction data further comprises frequency instruction data instructing a frequency of the vibration of the vibration motor, and the adjusting comprises increasing the value indicated by the amplitude instruction data when the frequency instruction data indicates a specified frequency.

(Aspect 5) The vibration control system according to aspect 1, wherein: the vibration instruction data further comprises frequency instruction data instructing a frequency of the vibration of the vibration motor, and the adjusting further comprises adjusting the value indicated by the amplitude instruction data so as not to exceed a maximum amplitude of the vibration motor according to the frequency instructed by the frequency instruction data.

(Aspect 6) The vibration control system according to aspect 5, wherein: in the adjusting, the value indicated by the amplitude instruction data at a first frequency is increased, and the value indicated by the amplitude instruction data at a second frequency is decreased by the adjustment according to the amplitude instruction data and the adjustment according to the frequency instruction data.

(Aspect 7) The vibration control system according to aspect 6, wherein: the amplitude instruction data is data indicating a ratio to a maximum amplitude, and the adjusting is configured so that an amplitude of the control becomes larger than a value obtained by the multiplying the maximum amplitude at the frequency instructed by the frequency instruction data by the amplitude indicated by the amplitude instruction data.

(Aspect 8) The vibration control system according to aspect 5, wherein: the vibration instruction data further comprises frequency instruction data instructing a frequency of the vibration of the vibration motor, and the adjusting comprises increasing the value indicated by the amplitude instruction data when the frequency instruction data satisfies a specified condition.

(Aspect 9) The vibration control system according to aspect 5, wherein: the one or more memories further store adjustment data for collectively performing the adjustment according to the amplitude instruction data and the adjustment according to the frequency instruction data for each amplitude and each frequency, and in the adjusting, corresponding data among the adjustment data is referred to based on the amplitude instruction data and the frequency instruction data, and an amplitude of the control is determined based on the amplitude instruction data and the corresponding data.

(Aspect 10) One or more non-transitory computer-readable storage media having stored therein instructions that cause one or more processors to perform operations comprising: acquiring vibration instruction data comprising amplitude instruction data instructing an amplitude of vibration of a vibration motor, the generated vibration instruction being generated based on an occurrence of a vibration event; and adjusting a value of the amplitude instruction data according to the amplitude instructed by the acquired vibration instruction data; and controlling the vibration motor based on the adjusted value.

(Aspect 11) The one or more non-transitory computer-readable storage media according to aspect 10, wherein: the adjusting comprises increasing the value of the amplitude instruction data when the amplitude instruction data instructs a value smaller than the maximum amplitude.

(Aspect 12) The one or more non-transitory computer-readable storage media according to aspect 10, wherein: the adjusting comprises increasing the value of the amplitude instruction data when the amplitude instruction data instructs less than or equal to half of a maximum amplitude.

(Aspect 13) The one or more non-transitory computer-readable storage media according to aspect 10, wherein: the vibration instruction data further comprises frequency instruction data instructing a frequency of the vibration of the vibration motor, and wherein the adjusting further comprises adjusting the value of the amplitude instruction data so as not to exceed a maximum amplitude of the vibration motor according to the frequency instructed by the frequency instruction data.

(Aspect 14) The one or more non-transitory computer-readable storage media according to aspect 13, in the adjusting, the value indicated by the amplitude instruction data at a first frequency is increased, and the value indicated by the amplitude instruction data at a second frequency is decreased by the adjustment according to the amplitude instruction data and the adjustment according to the frequency instruction data.

(Aspect 15) The one or more non-transitory computer-readable storage media according to aspect 14, wherein: the amplitude instruction data is data indicating a ratio to a maximum amplitude, and wherein the adjusting is configured so that an amplitude indicated by the adjustment amplitude instruction data becomes larger than a value obtained by multiplying the maximum amplitude at the frequency instructed by the frequency instruction data by the amplitude indicated by the amplitude instruction data.

(Aspect 16) The one or more non-transitory computer-readable storage media according to aspect 13, wherein: the vibration instruction data further comprises frequency instruction data instructing a frequency of the vibration of the vibration motor, and the adjusting comprises increasing the value indicated by the amplitude instruction data when the frequency instruction data satisfies a specified condition.

(Aspect 17) The one or more non-transitory computer-readable storage media according to aspect 13, wherein the adjusting comprises referring to corresponding data among adjustment data for collectively performing the adjustment according to the amplitude instruction data and the adjustment according to the frequency instruction data for each amplitude and each frequency for each amplitude and each frequency based on the amplitude instruction data and the frequency instruction data, and in the adjusting, corresponding data among the adjustment data is referred to based on the amplitude instruction data and the frequency instruction data, and an amplitude of the control is determined based on the amplitude instruction data and the corresponding data.

(Aspect 18) A computer-implemented method, comprising: generating vibration instruction data comprising amplitude instruction data instructing an amplitude of vibration of a vibration motor based on an occurrence of a vibration event; and performing a first adjustment adjusting a value indicated by the amplitude instruction data according to the amplitude instructed by the amplitude instruction data; and controlling the vibration motor based on the adjusted value.

(Aspect 19) The method according to aspect 18, wherein: the vibration instruction data further comprises frequency instruction data instructing a frequency of the vibration of the vibration motor, and the method further comprising performing a second adjustment adjusting the value of the amplitude instruction data so as not to exceed a maximum amplitude of the vibration motor according to the frequency instructed by the frequency instruction data.

(Aspect 20) The method according to aspect 19, wherein: a first vibration motor and a second vibration motor are controllable by causing the one or more processors to execute processing, the first adjustment is performed when the second vibration motor is controlled, and the first adjustment is not performed when the first vibration motor is controlled.

The example embodiments disclosed this time should be considered in all respects as illustrative and not restrictive. The scope of the present invention is indicated by the scope of the claims rather than the description described above, and is intended to comprise all changes within a meaning and scope equivalent to the scope of the claims.

## Claims

1. A vibration control system (10) comprising:
one or more processors and/or processing circuits; and
one or more memories storing instructions that cause the one or more processors and/or processing circuits to perform operations comprising:
generating vibration instruction data (114) comprising amplitude instruction data instructing a vibration amplitude of a vibration motor (206), based on occurrence of a vibration event, the vibration motor being controlled using a control amplitude;
determining at least one of whether an amplitude instructed by previous amplitude instruction data is zero or substantially zero, or whether a previous control amplitude is zero or substantially zero
increasing the control amplitude instructed by the amplitude instruction data based on the determining, and
controlling the vibration motor using the increased control amplitude.

2. The vibration control system (10) according to claim 1, wherein:
the vibration instruction data (114) further comprises frequency instruction data instructing a vibration frequency; and
the increasing is performed when a frequency instructed by the generated frequency instruction data satisfies a specified condition.

3. The vibration control system (10) according to claim 1 or 2, wherein:
a plurality of the vibration instruction data (114) are generated for one timing; the operations further comprise performing a first adjustment of a total of amplitudes related to the plurality of vibration instruction data (114) for the same timing; and
the increasing is executed before the first adjustment.

4. The vibration control system (10) according to claim 3, wherein:
the increasing is configured to increase the amplitude instructed by the amplitude instruction data when the amplitude instructed by the previous amplitude instruction data is zero or substantially zero, or when the previous control amplitude is zero or substantially zero, for each of the plurality of vibration instruction data (114) generated for the same timing.

5. The vibration control system (10) according to any one of claims 1 to 4, wherein:
the vibration control system (10) is capable of controlling a first vibration motor and a second vibration motor; and
the increasing is performed when the second vibration motor is controlled and is not performed when the first vibration motor is controlled.

6. The vibration control system (10) according to any one of claims 1 to 4, wherein, the operations further comprise:
selecting whether to generate control data that gradually approaches an amplitude instructed by current vibration instruction data (114) or to immediately generate control data corresponding to the amplitude instructed by the current vibration instruction data (114), based on the determining.

7. A program causing one or more processors and/or processing circuits to perform operations comprising:
acquiring vibration instruction data (114) comprising amplitude instruction data instructing a vibration amplitude of a vibration motor (206) controlled using a control amplitude, the vibration instruction data being generated based on occurrence of a vibration event;
determining at least one of whether an amplitude instructed by previous amplitude instruction data is zero or substantially zero, or whether a previous control amplitude is zero or substantially zero;
increasing the control amplitude instructed by the amplitude instruction data based on the determining; and
controlling the vibration motor using the increased control amplitude.

8. The program according to claim 7, wherein:
the vibration instruction data (114) further comprises frequency instruction data instructing a vibration frequency; and
the increasing is performed when a frequency instructed by the generated frequency instruction data satisfies a specified condition.

9. The program according to claim 7, wherein:
a plurality of the vibration instruction data (114) are generated for one timing; the operations further comprise:
adjusting a total of amplitudes related to the plurality of vibration instruction data (114) for the same timing as a first adjustment; and
the increasing is performed before the adjusting.

10. The program according to claim 9, wherein:
the increasing is configured to increase the amplitude instructed by the amplitude instruction data when the amplitude instructed by the previous amplitude instruction data is zero or substantially zero, or when the previous control amplitude is zero or substantially zero, for each of the plurality of vibration instruction data (114) generated for the same timing.

11. The program according to claim 7, wherein:
the one or more processors are capable of controlling a first vibration motor and a second vibration motor by executing processing of the program; and
the increasing is performed when the second vibration motor is controlled, and is not performed when the first vibration motor is controlled.

12. A computer-implemented method, comprising:
acquiring vibration instruction data (114) comprising amplitude instruction data instructing a vibration amplitude of the vibration motor (206) generated based on occurrence of a vibration event; and the vibration motor being controlled using a control amplitude;
determining at least one of whether an amplitude instructed by previous amplitude instruction data is zero or substantially zero, or whether a previous control amplitude is zero or substantially zero;
increasing the control amplitude instructed by the amplitude instruction data based on the determining; and
controlling the vibration motor using the increased control amplitude.

13. The method according to claim 12, wherein:
the vibration instruction data (114) further comprises frequency instruction data instructing a vibration frequency; and
the increasing is executed when a frequency instructed by the generated frequency instruction data satisfies a specified condition.

14. The method according to claim 12, wherein:
a plurality of the vibration instruction data (114) are generated for one timing; the method further comprises adjusting a total of amplitudes related to the plurality of vibration instruction data (114) for the same timing as a first adjustment; and
the increasing is performed before the adjusting.

15. The method according to claim 12, wherein:
a first vibration motor and a second vibration motor are controllable; and
the increasing is performed when the second vibration motor is controlled, and is not performed when the first vibration motor is controlled.
